(19) Europäisches Patentamt
European Patent Office
Office européen des brevets

(11) EP 4 755 967 A1

(12) **EUROPEAN PATENT APPLICATION**
published in accordance with Art. 153(4) EPC

(43) Date of publication:
**10.06.2026 Bulletin 2026/24**

(21) Application number: **24848793.6**

(22) Date of filing: **02.07.2024**

(51) International Patent Classification (IPC):
***C08L 21/00*** *(2006.01)* ***B60C 1/00*** *(2006.01)*
***C08K 3/013*** *(2018.01)* ***C08K 3/36*** *(2006.01)*
***C08L 7/00*** *(2006.01)* ***C08L 9/00*** *(2006.01)*
***C08L 101/00*** *(2006.01)*

(52) Cooperative Patent Classification (CPC):
**B60C 1/00; C08K 3/013; C08K 3/36; C08L 7/00; C08L 9/00; C08L 21/00; C08L 101/00**

(86) International application number:
**PCT/JP2024/023989**

(87) International publication number:
**WO 2025/028134 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.07.2023 JP 2023125046**

(71) Applicant: **BRIDGESTONE CORPORATION**
**Chuo-ku**
**Tokyo 104-8340 (JP)**

(72) Inventor: **KAWASHIMA Masahiro**
**Tokyo 104-8340 (JP)**

(74) Representative: **Marks & Clerk LLP**
**15 Fetter Lane**
**London EC4A 1BW (GB)**

(54) **RUBBER COMPOSITION FOR TIRES, AND TIRE**

(57) With the aim of providing a rubber composition for a tire capable of improving the ratio of sustainable materials in tires, a rubber composition for a tire contains a rubber component (A), a filler (B), and a resin (C), wherein the rubber component (A) includes two or more types of rubber, the filler (B) includes plant-derived silica (B1), and a ratio of the plant-derived silica (B1) in the filler (B) is 45 mass% or more.



Processed by Luminess, 75001 PARIS (FR)

## Description

TECHNICAL FIELD

The present disclosure relates to a rubber composition for a tire, and a tire.

BACKGROUND

Conventionally, from the viewpoint of improving vehicle safety, various technologies have been studied to improve tire performance, not only on dry road surfaces but also to enhance grip performance on wet road surfaces (hereinafter referred to as "wet gripping performance"). On the other hand, in connection with the recent global movement toward carbon dioxide emission regulations due to growing interest in environmental issues, there is an increasing demand for improved fuel efficiency in automobiles. To meet such demands, improvement in tire performance, specifically enhancement of high fuel efficiency (i.e., reduction of rolling resistance), is required.

In response, PTL 1 proposes a rubber composition for a tire capable of providing a tire excellent in both wet gripping performance and high fuel efficiency (low loss property), which comprises: a rubber component containing at least one selected from styrene-butadiene rubber and polybutadiene rubber in an amount of 50 mass% or more; a filler selected from carbon black and silica; and, per 100 parts by mass of the rubber component, 5 to 50 parts by mass of polybutene and 1 to 30 parts by mass of at least one phenol resin selected from unmodified phenol resin and modified phenol resin, wherein the modified phenol resin has a modifying group selected from a cyclic modifying group and a non-cyclic modifying group having 1 to 7 carbon atoms.

CITATION LIST

Patent Literature

PTL 1: JP 2019-218464 A

SUMMARY

(Technical Problem)

Meanwhile, in recent years, from the viewpoint of social sustainability, there is a demand to increase the ratio of so-called sustainable materials, such as materials derived from biological resources (biomass resources) and materials derived from recycled resources, in various members used in tires.

However, among the materials blended in rubber compositions for tires, the use of sustainable materials for silica has not been studied so far.

Therefore, an object of the present disclosure is to provide a rubber composition for a tire capable of improving the ratio of sustainable materials in tires.

Another object of the present disclosure is to provide a tire in which the ratio of sustainable materials has been improved.

(Solution to Problem)

The gist configuration of the rubber composition for a tire and the tire of the present disclosure that solve the above problems is as follows.

[1] A rubber composition for a tire comprising a rubber component (A), a filler (B), and a resin (C), wherein

the rubber component (A) includes two or more types of rubber,
the filler (B) includes plant-derived silica (B1), and
a ratio of the plant-derived silica (B1) in the filler (B) is 45 mass% or more.

[2] The rubber composition for a tire according to [1], wherein the rubber component (A) includes isoprene skeleton rubber.
[3] The rubber composition for a tire according to [1] or [2], wherein content of the resin (C) is 1 part by mass to 50 parts by mass per 100 parts by mass of the rubber component (A).
[4] The rubber composition for a tire according to any one of [1] to [3], wherein the rubber component (A) includes

styrene-butadiene rubber.

[5] The rubber composition for a tire according to any one of [1] to [4], wherein the resin (C) is a hydrogenated resin having a softening point of higher than 110°C and a polystyrene-equivalent weight-average molecular weight of 200 g/mol to 1600 g/mol.

[6] The rubber composition for a tire according to any one of [1] to [5], wherein the plant-derived silica (B1) is silica derived from a gramineous plant.

[7] The rubber composition for a tire according to [6], wherein the plant-derived silica (B1) is silica derived from rice husk.

[8] The rubber composition for a tire according to any one of [1] to [7], wherein the rubber composition is for a tire tread.

[9] A tire comprising tread rubber made from the rubber composition for a tire according to any one of [1] to [8].

(Advantageous Effect)

According to the present disclosure, it is possible to provide a rubber composition for a tire capable of improving the ratio of sustainable materials in tires.

Further, according to the present disclosure, it is possible to provide a tire in which the ratio of sustainable materials has been improved.

BRIEF DESCRIPTION OF THE DRAWINGS

In the accompanying drawings:
FIG. 1 is a cross-sectional view illustrating one embodiment of a tire according to the present disclosure.

DETAILED DESCRIPTION

Hereinafter, the rubber composition for a tire and the tire of the present disclosure will be exemplified and described in detail based on embodiments thereof.

<Definitions>

The compounds described in the present specification may be partially or entirely derived from fossil resources, derived from biological resources such as plant resources, or derived from recycled resources such as used tires. Further, they may be derived from a mixture of any two or more of fossil resources, biological resources, and recycled resources.

In the present specification, the "ratio of sustainable materials" refers to the total mass ratio of materials derived from biological resources (biomass resources) and materials derived from recycled resources in the target rubber composition for a tire and in the tire.

In the present specification, the aforementioned biological resources (biomass resources) refer to carbon-neutral organic resources of biological origin, and include, for example, those stored in the form of starch or cellulose, the bodies of animals that grow by eating plants, products obtained by processing plants or animals, and the like, and exclude fossil resources (petroleum, coal, natural gas, etc.). The biological resources may be edible or non-edible, but from the viewpoint of not competing with food and effective utilization of resources, non-edible resources are preferred.

Specific examples of the aforementioned biological resources include, for example, cellulose-based crops (pulp, kenaf, wheat straw, rice straw, waste paper, papermaking residues, etc.), wood, charcoal, compost, kitchen waste, plant oil cake, fishery residues, livestock excrement, food waste, sewage sludge, natural rubber, cotton, fats and oils (palm oil, castor oil, cottonseed oil, soybean oil, linseed oil, rapeseed oil, Cocos nucifera oil, peanut oil, tall oil, corn oil, rice bran oil, safflower oil, sesame oil, olive oil, sunflower oil, palm kernel oil, camellia oil, jojoba oil, macadamia nut oil, tung oil, coconut oil, etc.), carbohydrate-based crops (corn, wheat, rice, rice husk, rice bran, old rice, tubers, buckwheat, cassava, sago palm, sugarcane, etc.), bagasse (i.e., residue after juice extraction from sugarcane), soybeans, okara (soy pulp), essential oils (pine root oil, orange oil, eucalyptus oil, etc.), black liquor from pulp, algae, and the like. As the biological resources, processed products thereof (i.e., substances derived from biological resources) may also be used. Processing methods include, for example, biological processing methods utilizing the action of microorganisms, plants, animals, or their tissue cultures; chemical processing methods utilizing acids, alkalis, catalysts, thermal energy, light energy, etc.; physical processing methods such as micronization, compression, microwave treatment, electromagnetic wave treatment, and the like. Further, as the biological resources, substances extracted or purified from the aforementioned biological resources or processed biological resources (i.e., substances derived from biological resources) may also be used. For example, sugars, proteins, amino acids, fatty acids, fatty acid esters, etc., purified from the aforementioned biological resources may be used. Examples of the sugars include sucrose, glucose, trehalose, fructose, lactose, galactose, xylose, allose, talose, gulose, altrose, mannose, idose, arabinose, apiose, maltose, cellulose, starch, chitin, etc., derived from biological

resources. Examples of the proteins include compounds derived from biological resources in which amino acids (preferably L-amino acids) are linked, and oligopeptides such as dipeptides are also included. Examples of the amino acids include valine, leucine, isoleucine, arginine, lysine, asparagine, glutamine, phenylalanine, etc., derived from biological resources, among which valine, leucine, isoleucine, arginine, and phenylalanine are preferred. The amino acids may be L-amino acids or D-amino acids, but from the viewpoint of abundance in nature and ease of availability, L-amino acids are preferred. Examples of the fatty acids include butyric acid, palmitic acid, stearic acid, oleic acid, linoleic acid, linolenic acid, etc., derived from biological resources. Examples of the fatty acid esters include plant oils, animal oils, and modified products of fats and oils derived from biological resources. Various materials and impurities may be mixed in these biological resources.

In the present specification, the aforementioned recycled resources refer to resources obtained by recycling (reprocessing) products that have been used once, collected without being used, or discarded. For example, as recycled resources, resources obtained by recycling (reprocessing) used rubber products such as used tires can be mentioned.

<Rubber Composition for Tire>

The rubber composition for a tire of the present embodiment includes a rubber component (A), a filler (B), and a resin (C). In the rubber composition for a tire of the present embodiment, the rubber component (A) includes two or more types of rubber, the filler (B) includes plant-derived silica (B1), and the ratio of the plant-derived silica (B1) in the filler (B) is 45 mass% or more.

In the rubber composition for a tire of the present embodiment, the plant-derived silica (B1) is a material derived from biological resources (biomass resources), and since the ratio of the plant-derived silica (B1) in the filler (B) is 45 mass% or more, the rubber composition for a tire of the present embodiment has a high ratio of sustainable materials. Therefore, by applying the rubber composition for a tire of the present embodiment to a tire, it is possible to improve the ratio of sustainable materials in the tire.

Note that, in a rubber composition for a tire including a rubber component (A), a filler (B), and a resin (C), wherein the rubber component (A) includes two or more types of rubber, even if 45 mass% or more of the filler (B) is plant-derived silica (B1), performance such as wet gripping performance (gripping performance on wet road surfaces) and high fuel efficiency (low loss property) is not impaired.

(Rubber Component (A))

The rubber composition for a tire of the present embodiment includes a rubber component (A), and the rubber component (A) imparts rubber elasticity to the composition. The rubber component (A) preferably has a sustainable ratio of 30 mass% or more, more preferably 40 mass% or more, even more preferably 50 mass% or more, still more preferably 60 mass% or more, yet more preferably 70 mass% or more, further preferably 80 mass% or more, even more preferably 90 mass% or more, and particularly preferably 100 mass%.

Here, the "sustainable ratio" of the rubber component (A) refers to the total mass ratio of components derived from biological resources (biomass resources) and components derived from recycled resources in the rubber component (A).

As the rubber component (A), rubber derived from biological resources and rubber derived from recycled resources are preferred.

Here, the proportion of monomer components derived from biological resources in 100 mol% of the monomer components constituting the rubber derived from biological resources is preferably 50 mol% or more, more preferably 70 mol% or more, even more preferably 80 mol% or more, yet more preferably 90 mol% or more, particularly preferably 95 mol% or more, and may be 100 mol%.

Further, the proportion of monomer components derived from recycled resources in 100 mol% of the monomer components constituting the rubber derived from recycled resources is preferably 50 mol% or more, more preferably 70 mol% or more, even more preferably 80 mol% or more, yet more preferably 90 mol% or more, particularly preferably 95 mol% or more, and may be 100 mol%.

The rubber component (A) is a component that contributes to crosslinking, and usually has a weight-average molecular weight (Mw) of 10,000 or more, preferably 50,000 or more, more preferably 150,000 or more, still more preferably 200,000 or more, and preferably 5,000,000 or less, more preferably 2,000,000 or less, even more preferably 1,500,000 or less, and still more preferably 1,300,000 or less.

Note that, in the present specification, the weight-average molecular weight (Mw) of the rubber component (A) can be determined, for example, by conversion to standard polystyrene based on measurement values obtained by gel permeation chromatography (GPC) (GPC-8000 series manufactured by Tosoh Corporation, detector: differential refractometer, column: TSKGEL SUPERMULTIPORE HZ-M manufactured by Tosoh Corporation).

As the rubber component (A), diene-based rubber is preferred, and as the diene-based rubber, isoprene-based

rubber and butadiene-based rubber are preferred. Here, isoprene-based rubber refers to rubber containing units derived from isoprene as monomer units, and butadiene-based rubber refers to rubber containing units derived from butadiene as monomer units.

Examples of the isoprene-based rubber include natural rubber (NR), synthetic isoprene rubber (IR), upgraded natural rubber (upgraded NR), modified natural rubber (modified NR), modified synthetic isoprene rubber (modified IR), and the like. As the natural rubber (NR), for example, generally used types in the tire industry such as RSS #3, TSR20 (for example, SIR20 or STR20), and the like can be used. The origin of the natural rubber (NR) is not particularly limited, and examples include those derived from the Para rubber tree, guayule, Russian dandelion, and the like. As the synthetic isoprene rubber (IR), it is not particularly limited, and for example, generally used types in the tire industry such as IR2200 can be used. Examples of the upgraded NR include deproteinized natural rubber (DPNR), ultra-pure natural rubber (UPNR), and the like. Examples of the modified NR include epoxidized natural rubber (ENR), hydrogenated natural rubber (HNR), grafted natural rubber, and the like. Examples of the modified IR include epoxidized synthetic isoprene rubber, hydrogenated synthetic isoprene rubber, grafted synthetic isoprene rubber, and the like. These isoprene-based rubbers may be used alone or in combination of two or more. Among these, NR is preferred as the isoprene-based rubber.

The isoprene-based rubber preferably has a sustainable ratio of 30 mass% or more, more preferably 40 mass% or more, even more preferably 50 mass% or more, still more preferably 60 mass% or more, yet more preferably 70 mass% or more, further preferably 80 mass% or more, even more preferably 90 mass% or more, and particularly preferably 100 mass%.

In order to set the sustainable ratio of the isoprene-based rubber within the above range, it is preferable to use natural rubber (NR) or to use a polymer synthesized using isoprene derived from biological resources or isoprene derived from recycled resources as the monomer component. In this case, the synthesized polymer may be a homopolymer of a monomer derived from biological resources, a homopolymer of a monomer derived from recycled resources, a copolymer of a monomer derived from biological resources and a monomer derived from recycled resources, or a copolymer of a monomer derived from biological resources and/or a monomer derived from recycled resources and a monomer derived from fossil resources (such as petroleum).

Examples of the butadiene-based rubber include butadiene rubber (BR), aromatic vinyl compound-butadiene copolymer rubber (for example, styrene-butadiene rubber (SBR)), and the like. Here, the butadiene used as a raw material for the butadiene-based rubber is preferably derived from biological resources or recycled resources.

Examples of the butadiene rubber (BR) include, for example, high-cis butadiene rubber, low-cis butadiene rubber, butadiene rubber containing syndiotactic polybutadiene crystals, and the like. As the butadiene rubber (BR), commercially available products can be used, and examples of such commercially available butadiene rubber products include those from UBE Elastomer Co., Ltd., ENEOS Materials Corporation, Asahi Kasei Corporation, Zeon Corporation, and the like. These butadiene rubbers may be used alone or in combination of two or more.

Examples of the aromatic vinyl compound-butadiene copolymer rubber (for example, SBR) include, for example, emulsion-polymerized aromatic vinyl compound-butadiene copolymer rubber (for example, emulsion-polymerized styrene-butadiene rubber (E-SBR)), solution-polymerized aromatic vinyl compound-butadiene copolymer rubber (for example, solution-polymerized styrene-butadiene rubber (S-SBR)), and the like. In the aromatic vinyl compound-butadiene copolymer rubber, examples of the aromatic vinyl compound (aromatic vinyl monomer) include styrene, vinyl naphthalene, divinyl naphthalene, and the like. These aromatic vinyl compounds may be used alone or in combination of two or more. Among these, styrene is preferred, and styrene derived from biological resources and styrene derived from recycled resources are particularly preferred. That is, SBR is preferred as the aromatic vinyl compound-butadiene copolymer rubber. Note that the styrene may have a substituent. As the aromatic vinyl compound-butadiene copolymer rubber, commercially available products can be used, and examples of such commercially available products include those from Asahi Kasei Corporation, ENEOS Materials Corporation, Zeon Corporation, Sumitomo Chemical Co., Ltd., and the like. These aromatic vinyl compound-butadiene copolymer rubbers may be used alone or in combination of two or more.

The butadiene-based rubber preferably has a sustainable ratio of 30 mass% or more, more preferably 40 mass% or more, even more preferably 50 mass% or more, still more preferably 60 mass% or more, yet more preferably 70 mass% or more, further preferably 80 mass% or more, even more preferably 90 mass% or more, and particularly preferably 100 mass%.

In order to set the sustainable ratio of the butadiene-based rubber within the above range, for example, it is sufficient to use a polymer synthesized using butadiene derived from biological resources, butadiene derived from recycled resources, aromatic vinyl compounds derived from biological resources (for example, styrene derived from biological resources), or aromatic vinyl compounds derived from recycled resources (for example, styrene derived from recycled resources) as the monomer component. In this case, the synthesized polymer may be a homopolymer of a monomer derived from biological resources, a homopolymer of a monomer derived from recycled resources, a copolymer of a monomer derived from biological resources and a monomer derived from recycled resources, or a copolymer of a monomer derived from biological resources and/or a monomer derived from recycled resources and a monomer derived from fossil resources (such as petroleum). Note that, in the butadiene rubber (B-BR) derived from biological resources

(biomass resources) and the aromatic vinyl compound-butadiene copolymer rubber derived from biological resources (for example, styrene-butadiene rubber (B-SBR) derived from biological resources (biomass resources)), not only rubber obtained by polymerizing butadiene, etc., by conventional methods is included, but also rubber obtained by reactions or enzyme reactions using microorganisms, plants, animals, or their tissue cultures (hereinafter also referred to as "microorganisms, etc.") is included.

Further, in order to set the overall sustainable ratio of the rubber component (A) within the above range, it is preferable to use natural rubber (NR) as the rubber component (A), or to use a polymer synthesized using monomer components derived from biological resources or monomer components derived from recycled resources as the monomer component.

Generally, materials for rubber compositions for tires (rubber and its monomers, fillers, resins, etc.) require large-scale manufacturing equipment for their production, and are usually produced in large factories in specific regions, requiring a lot of energy for storage and transportation of raw materials and products. In contrast, materials derived from biological resources (biomass resources) originate from agricultural products, forests, etc., in each region, and can be produced on a small scale by fermentation of microorganisms or catalytic reactions, so by utilizing products or waste from each region, it is possible to reduce the energy required for transportation and storage of raw materials, and furthermore, to reduce the energy required for transportation and storage of the produced materials to the tire factory, making it environmentally friendly. In addition, materials derived from recycled resources can be obtained, for example, by dismantling and pyrolyzing used tires to extract materials constituting the tire, such as rubber, fillers, steel cords, etc. Furthermore, sulfur can be obtained from biological resources or processed biological resources by a method including a desulfurization step of removing sulfur-containing substances from the biological resources or processed biological resources by desulfurization, a recovery step of recovering sulfur from the desulfurization residue generated in the desulfurization step, and a processing step of processing the recovered sulfur into sulfur for vulcanization (for example, the method described in Japanese Patent Application No. 2022-140390), and thus, materials for rubber compositions for tires can be obtained from various wastes and used articles. In this way, by using sustainable materials (materials derived from biological resources or materials derived from recycled resources), it is possible to comprehensively reduce environmental impact in tire manufacturing, such as reduction of carbon dioxide emissions over the entire life cycle (LCCO2), reduction of energy consumption over the entire life cycle (LCE), reduction of costs generated over the entire life cycle (LCC), and reduction of fossil resource usage.

Furthermore, when manufacturing the rubber composition, by appropriately selecting the ratio of monomer components derived from biological resources, monomer components derived from recycled resources, and monomer components derived from fossil resources according to the supply situation of biological resources, recycled resources, and fossil resources (for example, monomer components derived from fossil resources), and/or market demands for these resources (for example, demand for biological resources as food), and by polymerizing monomer components derived from biological resources, monomer components derived from recycled resources, and monomer components derived from fossil resources, it is possible to obtain rubber derived from sustainable materials (materials derived from biological resources or recycled resources) having performance equivalent to that of conventional synthetic rubber. Note that, when using monomer components derived from recycled resources, it may be difficult to separate them from monomer components derived from fossil resources due to reasons in the manufacturing process of the monomer. In such cases, by adopting the concept of mass balance, it is possible to evaluate the environmental impact.

The ratio of each monomer unit (for example, units derived from isoprene, units derived from butadiene, units derived from aromatic vinyl compounds) in the entire rubber component (A) can be appropriately adjusted according to the member or the like to which it is applied. The ratio of each monomer unit in the entire rubber component can be adjusted, for example, by appropriately combining the above-described isoprene-based rubber and butadiene-based rubber. In addition, the ratio of cis-bond units among the units derived from butadiene can also be appropriately adjusted according to the member or the like to which it is applied.

Note that, in the present specification, "monomer unit" means a structural unit of a polymer, "unit derived from isoprene" means a structural unit in a polymer constructed based on isoprene as a monomer (including isoprene units in natural rubber), "unit derived from butadiene" means a structural unit in a polymer constructed based on butadiene as a monomer, and "unit derived from an aromatic vinyl compound" means a structural unit in a polymer constructed based on an aromatic vinyl compound as a monomer.

Further, in the present specification, the ratio of each monomer unit is measured by NMR.

The rubber component (A) may include, in addition to the above-described isoprene-based rubber, butadiene rubber (BR), and aromatic vinyl compound-butadiene copolymer rubber (for example, SBR), diene-based rubbers such as acrylonitrile-butadiene rubber (NBR), chloroprene rubber (CR), butyl rubber (IIR), and styrene-isoprene-butadiene copolymer rubber (SIBR). These rubber components may be used alone or in combination of two or more kinds.

The rubber component (A) may have functional groups introduced by modification that interact with fillers such as carbon black and silica. Examples of such functional groups include an amino group, amide group, isocyanate group, imino group, imidazole group, urea group, ammonium group, imide group, hydrazo group, azo group, diazo group,

carboxyl group, nitrile group, pyridyl group, alkoxy group, hydroxyl group, oxy group, epoxy group, ether group, carbonyl group, oxycarbonyl group, silyl group, alkoxy silyl group, mercapto group, sulfide group, disulfide group, sulfonyl group, sulfinyl group, thiocarbonyl group, and the like, and these functional groups may have substituents. These functional groups may be introduced into the rubber component alone or in combination of two or more kinds. Among these, an amino group, alkoxy group, and alkoxy silyl group are preferred, and a substituted amino group in which a hydrogen atom of the amino group is substituted with an alkyl group having 1 to 6 carbon atoms, an alkoxy group having 1 to 6 carbon atoms, and an alkoxy silyl group having 1 to 6 carbon atoms are more preferred.

The above functional groups can be introduced, for example, by reacting a compound (modifier) having such a functional group with the rubber component. The functional group is a modifying functional group having affinity for fillers such as silica and carbon black, and examples include nitrogen-containing functional groups, silicon-containing functional groups, and oxygen-containing functional groups. Examples of compounds (modifiers) having nitrogen-containing functional groups include amino group-containing compounds; examples of compounds (modifiers) having silicon-containing functional groups include silicon halides and hydrocarbyloxy silane compounds; and examples of compounds (modifiers) having oxygen-containing functional groups include alkoxy group-containing compounds, alkylene oxide group-containing compounds, and trialkylsilyloxy group-containing compounds. More specifically, compounds described in International Publication No. 2016/194316 and International Publication No. 2019/117256 can be mentioned. These modifiers may be used alone or in combination of two or more kinds.

The rubber derived from the above sustainable materials (materials derived from biological resources or recycled resources) can be produced, for example, by using monomer components derived from biological resources or monomer components derived from recycled resources, and, if necessary, monomer components derived from fossil resources, in the same manner as the conventional method for producing synthetic rubber derived from fossil resources. In addition, the rubber derived from sustainable materials (particularly, rubber derived from biological resources) can also be obtained by reactions using microorganisms or by enzymatic reactions.

As a method for preparing biological resource-derived rubber from the above-described biological resources, for example, the method described in JP 2022-179158 A can be used. For example, by using butadiene obtained from biological resources as a monomer component, it is possible to obtain butadiene rubber (B-BR) derived from biological resources (biomass resources), and by using styrene obtained from biological resources and butadiene obtained from biological resources as monomer components, it is possible to obtain styrene-butadiene rubber (B-SBR) derived from biological resources (biomass resources). Here, as methods for obtaining B-BR and B-SBR from biological resources, in addition to artificial polymerization methods, methods of polymerization in vivo and methods of polymerization using bio-derived enzymes can be mentioned. The molecular weight, branching, microstructure, and the like of the obtained B-BR and B-SBR can be appropriately adjusted by changing the polymerization conditions according to known methods in accordance with the desired tire performance.

As the butadiene obtained from biological resources, butadiene derived from alkyl alcohols (preferably ethanol and butanol, more preferably butanol), butadiene derived from alkenes (preferably ethylene), and butadiene derived from unsaturated carboxylic acids (preferably tiglic acid) can be suitably used. These butadienes may be used in combination of two or more kinds.

In addition, as the styrene obtained from biological resources, styrene obtained from plants (preferably plants belonging to the Hamamelidaceae, Styracaceae, or Apocynaceae families, more preferably plants belonging to the Liquidambar, Styrax, or Catharanthus genera, and even more preferably Liquidambar formosana, Styrax japonicus, or Catharanthus roseus), and styrene obtained from microorganisms (preferably microorganisms belonging to the genus Penicillium or Escherichia, more preferably P. citrinum or transformed E. coli) can be suitably used. These styrenes may also be used in combination of two or more kinds.

Recently, biomass complexes centered on bioethanol and bioethylene are being planned, but bioethanol and bioethylene are mainly produced using saccharides and/or cellulose as biological resources, and cannot effectively utilize other biological resources such as proteins, lipids, and amino acids. Furthermore, saccharides compete with food, and excessive use of cellulose leads to deforestation. Therefore, in addition to the supply situation of various biological resources, it is preferable to use a plurality of types of monomer components derived from biological resources as the monomer components derived from biological resources, or to use monomer components derived from biological resources, monomer components derived from recycled resources, and monomer components derived from fossil resources in combination, and further to appropriately adjust the ratio of these monomer components according to the supply situation of recycled resources, the supply situation of fossil resources, and market demands (for example, demand for biomass resources as food). In this way, it is possible to effectively utilize a wide range of biological resources such as saccharides, proteins, and lipids, as well as recycled resources, without relying on a single type of biological resource, to stably supply rubber derived from sustainable materials, and furthermore, to take environmental considerations into account according to the situation at the time of production.

Note that, when using a plurality of types of monomer components derived from biological resources, it is preferable to use monomer components derived from different biological resources, that is, monomer components

obtained from different biological resources. Specifically, as the butadiene derived from biological resources, it is preferable to use a mixture of butadiene derived from a plurality of different biological resources, and/or as the styrene derived from biological resources, it is preferable to use a mixture of styrene derived from a plurality of different biological resources. In this way, it is possible to effectively utilize a plurality of types of biological resources.

The rubber component (A) contains two or more types of rubber. By including two or more types of rubber in the rubber component (A), it becomes easier to achieve both desired physical properties, for example, wet gripping performance and high fuel efficiency.

The rubber component (A) preferably includes isoprene skeleton rubber. The isoprene skeleton rubber is rubber having isoprene units as the main skeleton, and specifically includes the above-described natural rubber (NR), synthetic isoprene rubber (IR), upgraded natural rubber (upgraded NR), modified natural rubber (modified NR), and modified synthetic isoprene rubber (modified IR). By including isoprene skeleton rubber in the rubber component (A), the fracture strength of the rubber composition for tires can be increased. As a result, the durability of tires using the rubber composition can be improved.

The content of isoprene skeleton rubber in the rubber component (A) is preferably 10 mass% or more, more preferably 15 mass% or more, even more preferably 20 mass% or more, even more preferably 30 mass% or more, preferably 35 mass% or more, and even more preferably 41 mass% or more, from the viewpoint of improving the high fuel efficiency (lowering rolling resistance) and wear resistance of the tire. The content of isoprene skeleton rubber in the rubber component (A) is preferably 90 mass% or less, more preferably 70 mass% or less, even more preferably 65 mass% or less, even more preferably 60 mass% or less, and even more preferably 57 mass% or less.

The rubber component (A) preferably includes styrene-butadiene rubber (SBR). By including styrene-butadiene rubber in the rubber component (A), the affinity between the rubber component (A) and silica is improved, and the dispersibility of silica is enhanced, so that the balance between the wet gripping performance and high fuel efficiency of the tire can be improved.

The content of styrene-butadiene rubber in the rubber component (A) is preferably 10 mass% or more, more preferably 20 mass% or more, even more preferably 30 mass% or more, even more preferably 35 mass% or more, and even more preferably 41 mass% or more. The content of styrene-butadiene rubber in the rubber component (A) is preferably 90 mass% or less, more preferably 80 mass% or less, even more preferably 70 mass% or less, even more preferably 60 mass% or less, even more preferably 58 mass% or less, and even more preferably 53 mass% or less.

The rubber component (A) preferably includes the isoprene skeleton rubber and the styrene-butadiene rubber. When the rubber component (A) includes isoprene skeleton rubber and styrene-butadiene rubber, the effect of improving the wet gripping performance and high fuel efficiency of the tire becomes greater.

Here, the mass ratio (isoprene skeleton rubber/SBR) of the isoprene skeleton rubber to the styrene-butadiene rubber (SBR) is preferably in the range of 20/80 to 80/20, and more preferably in the range of 25/75 to 75/25. When the mass ratio (isoprene skeleton rubber/SBR) of isoprene skeleton rubber to styrene-butadiene rubber is within this range, the effects of both isoprene skeleton rubber and styrene-butadiene rubber are sufficiently exhibited, and the effect of improving the wet gripping performance and high fuel efficiency of the tire becomes even greater.

The styrene-butadiene rubber (SBR) may be unmodified or modified. When the styrene-butadiene rubber (SBR) is modified, it is preferably modified by at least one selected from the group consisting of hydrocarbyloxy silane compounds represented by the following general formula (I), hydrocarbyloxy silane compounds represented by the following general formula (II), hydrocarbyloxy silane compounds represented by the following general formula (III), coupling agents represented by the following general formula (IV), coupling agents represented by the following general formula (V), lithioamines represented by the following general formula (VI), and vinylpyridine.

[Chem. 1]

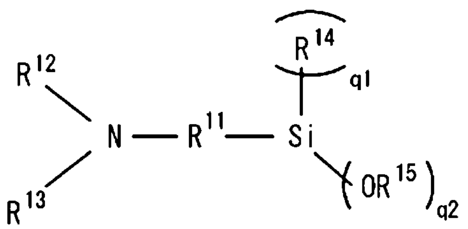

· · · · (I)

In the above general formula (I), q1 + q2 = 3 (where q1 is an integer from 0 to 2, and q2 is an integer from 1 to 3).

$R^{11}$ is a divalent aliphatic or alicyclic hydrocarbon group having 1 to 20 carbon atoms or a divalent aromatic hydrocarbon group having 6 to 18 carbon atoms.

$R^{12}$ and $R^{13}$ are each independently a hydrolyzable group, a monovalent aliphatic or alicyclic hydrocarbon group

having 1 to 20 carbon atoms, or a monovalent aromatic hydrocarbon group having 6 to 18 carbon atoms.

$R^{14}$ is a monovalent aliphatic or alicyclic hydrocarbon group having 1 to 20 carbon atoms or a monovalent aromatic hydrocarbon group having 6 to 18 carbon atoms, and when q1 is 2, each $R^{14}$ may be the same or different.

$R^{15}$ is a monovalent aliphatic or alicyclic hydrocarbon group having 1 to 20 carbon atoms or a monovalent aromatic hydrocarbon group having 6 to 18 carbon atoms, and when q2 is 2 or more, each $R^{15}$ may be the same or different.

[Chem. 2]

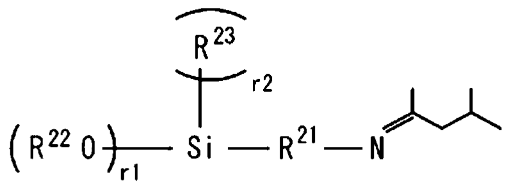

· · · · (II)

In the above general formula (II), r1 + r2 = 3 (where r1 is an integer from 1 to 3, and r2 is an integer from 0 to 2).

$R^{21}$ is a divalent aliphatic or alicyclic hydrocarbon group having 1 to 20 carbon atoms or a divalent aromatic hydrocarbon group having 6 to 18 carbon atoms.

$R^{22}$ is a dimethylaminomethyl group, dimethylaminoethyl group, diethylaminomethyl group, diethylaminoethyl group, methylsilyl(methyl)aminomethyl group, methylsilyl(methyl)aminoethyl group, methylsilyl(ethyl)aminomethyl group, methylsilyl(ethyl)aminoethyl group, dimethylsilylaminomethyl group, dimethylsilylaminoethyl group, a monovalent aliphatic or alicyclic hydrocarbon group having 1 to 20 carbon atoms, or a monovalent aromatic hydrocarbon group having 6 to 18 carbon atoms, and when r1 is 2 or more, each $R^{22}$ may be the same or different.

$R^{23}$ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms, and when r2 is 2, each $R^{23}$ may be the same or different.

[Chem. 3]

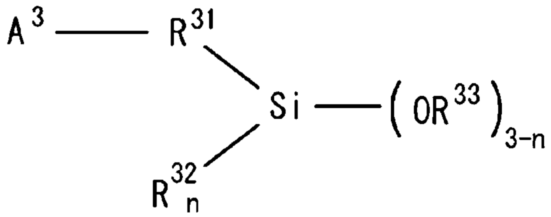

· · · · (III)

In the above general formula (III), $A^3$ is a monovalent group having at least one functional group selected from (thio)epoxy, (thio)isocyanate, (thio)ketone, (thio)aldehyde, imine, amide, isocyanuric acid trihydrocarbyl ester, (thio) carboxylic acid ester, (thio)carboxylic acid metal salt, carboxylic acid anhydride, carboxylic acid halide, and carbonic acid dihydrocarbyl ester. Here, "(thio)epoxy" refers to epoxy and thioepoxy, "(thio)isocyanate" refers to isocyanate and thioisocyanate, "(thio)ketone" refers to ketone and thioketone, "(thio)aldehyde" refers to aldehyde and thioaldehyde, "(thio)carboxylic acid ester" refers to carboxylic acid ester and thiocarboxylic acid ester, and "(thio)carboxylic acid metal salt" refers to carboxylic acid metal salt and thiocarboxylic acid metal salt.

$R^{31}$ is a single bond or a divalent inert hydrocarbon group, and the divalent inert hydrocarbon group preferably has 1 to 20 carbon atoms.

$R^{32}$ and $R^{33}$ each independently represent a monovalent aliphatic hydrocarbon group having 1 to 20 carbon atoms or a monovalent aromatic hydrocarbon group having 6 to 18 carbon atoms, n is an integer from 0 to 2, and when there are multiple $R^{32}$, the plurality of $R^{32}$ may be the same or different, and when there are multiple $OR^{33}$, the plurality of $OR^{33}$ may be the same or different.

Further, the molecule of the hydrocarbyloxy silane compound represented by general formula (III) does not contain an active proton or onium salt.

In General Formula (III), among the functional groups in $A^3$, imine includes ketimine, aldimine, and amidine, and (thio)carboxylic acid ester includes unsaturated carboxylic acid esters such as acrylate and methacrylate. Further, as the metal of the metal salt of (thio)carboxylic acid, examples include alkali metals, alkaline earth metals, Al, Sn, Zn, and the like.

As the divalent inert hydrocarbon group among $R^{31}$, an alkylene group having 1 to 20 carbon atoms is preferably exemplified. The alkylene group may be linear, branched, or cyclic, but particularly preferably linear. Examples of such

linear alkylene groups include methylene group, ethylene group, trimethylene group, tetramethylene group, pentamethylene group, hexamethylene group, octamethylene group, decamethylene group, dodecamethylene group, and the like.

As $R^{32}$ and $R^{33}$, examples include an alkyl group having 1 to 20 carbon atoms, an alkenyl group having 2 to 18 carbon atoms, an aryl group having 6 to 18 carbon atoms, and an aralkyl group having 7 to 18 carbon atoms. Here, the above alkyl group and alkenyl group may be linear, branched, or cyclic, and examples thereof include methyl group, ethyl group, n-propyl group, isopropyl group, n-butyl group, isobutyl group, sec-butyl group, tert-butyl group, pentyl group, hexyl group, octyl group, decyl group, dodecyl group, cyclopentyl group, cyclohexyl group, vinyl group, propenyl group, allyl group, hexenyl group, octenyl group, cyclopentenyl group, cyclohexenyl group, and the like. Further, the aryl group may have a substituent such as a lower alkyl group on the aromatic ring, and examples thereof include phenyl group, tolyl group, xylyl group, naphthyl group, and the like. Furthermore, the aralkyl group may have a substituent such as a lower alkyl group on the aromatic ring, and examples thereof include benzyl group, phenethyl group, naphthylmethyl group, and the like.

n is an integer of 0 to 2, but 0 is preferable, and it is necessary that there are no active protons or onium salts in this molecule.

As the hydrocarbyloxy silane compound represented by the above General Formula (III), for example, as (thio) epoxy group-containing hydrocarbyloxy silane compounds, preferably exemplified are 2-glycidoxyethyltrimethoxysilane, 2-glycidoxyethyltriethoxysilane, (2-glycidoxyethyl)methyldimethoxysilane, 3-glycidoxypropyltrimethoxysilane, 3-glycidoxypropyltriethoxysilane, (3-glycidoxypropyl)methyldimethoxysilane, 2-(3,4-epoxycyclohexyl)ethyltrimethoxysilane, 2-(3,4-epoxycyclohexyl)ethyltriethoxysilane, 2-(3,4-epoxycyclohexyl)ethyl(methyl)dimethoxysilane, 2-(3,4-epoxycyclohexyl)trimethoxysilane, and those in which the epoxy group in these compounds is replaced with a thioepoxy group, but among these, 3-glycidoxypropyltrimethoxysilane and 2-(3,4-epoxycyclohexyl)trimethoxysilane are particularly preferred.

Further, as imine group-containing hydrocarbyloxy silane compounds, preferably exemplified are N-(1,3-dimethylbutylidene)-3-(triethoxysilyl)-1-propanamine, N-(1-methylethylidene)-3-(triethoxysilyl)-1-propanamine, N-ethylidene-3-(triethoxysilyl)-1-propanamine, N-(1-methylpropylidene)-3-(triethoxysilyl)-1-propanamine, N-(4-N,N-dimethylaminobenzylidene)-3-(triethoxysilyl)-1-propanamine, N-(cyclohexylidene)-3-(triethoxysilyl)-1-propanamine, and the corresponding trimethoxysilyl compounds, methyldiethoxysilyl compounds, ethyldiethoxysilyl compounds, methyldimethoxysilyl compounds, ethyldimethoxysilyl compounds of these triethoxysilyl compounds, but among these, N-(1-methylpropylidene)-3-(triethoxysilyl)-1-propanamine and N-(1,3-dimethylbutylidene)-3-(triethoxysilyl)-1-propanamine are particularly preferred.

[Chem. 4]

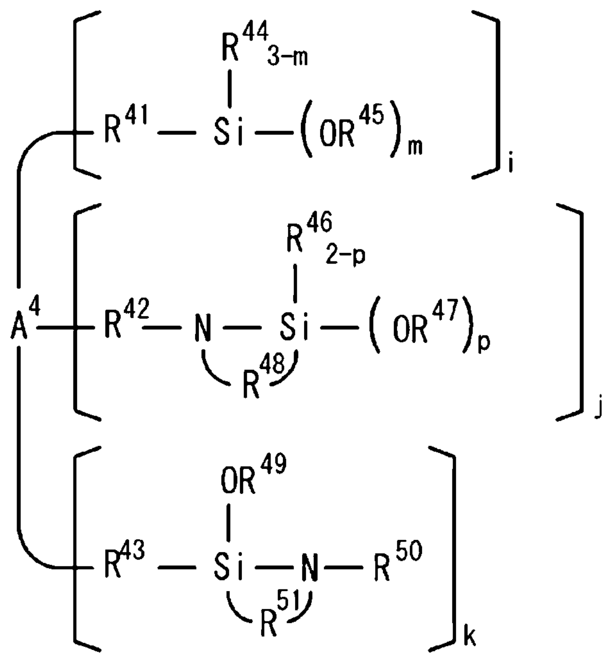

· · · · (IV)

In the above General Formula (IV), $R^{41}$, $R^{42}$, and $R^{43}$ each independently represent a single bond or an alkylene group having 1 to 20 carbon atoms.

$R^{44}$, $R^{45}$, $R^{46}$, $R^{47}$, and $R^{49}$ each independently represent an alkyl group having 1 to 20 carbon atoms.

$R^{48}$ and $R^{51}$ each independently represent an alkylene group having 1 to 20 carbon atoms.

$R^{50}$ represents an alkyl group or trialkylsilyl group having 1 to 20 carbon atoms.

m is an integer of 1 to 3, and p is 1 or 2.

When there are a plurality of $R^{41}$ to $R^{51}$, m, and p, they are each independent, and i, j, and k each independently represent an integer of 0 to 6, provided that (i + j + k) is an integer of 3 to 10.

$A^4$ represents a hydrocarbon group or an organic group having 1 to 20 carbon atoms, the organic group having at least one atom selected from the group consisting of oxygen atom, nitrogen atom, silicon atom, sulfur atom, and phosphorus atom, and not having active hydrogen.

Here, the coupling agent represented by the above General Formula (IV) is preferably at least one selected from the group consisting of tetrakis[3-(2,2-dimethoxy-1-aza-2-silacyclopentane)propyl]-1,3-propanediamine, tetrakis(3-trimethoxysilylpropyl)-1,3-propanediamine, and tetrakis(3-trimethoxysilylpropyl)-1,3-bisaminomethylcyclohexane.

$(R^5)_aZX_b$ ... (V)

In the above General Formula (V), Z is tin or silicon, and X is chlorine or bromine.

$(R^5)$ is selected from the group consisting of alkyl having 1 to 20 carbon atoms, cycloalkyl having 3 to 20 carbon atoms, aryl having 6 to 20 carbon atoms, and aralkyl having 7 to 20 carbon atoms. Here, specific examples of $(R^5)$ include methyl group, ethyl group, n-butyl group, neophyl group, cyclohexyl group, n-octyl group, 2-ethylhexyl group, and the like.

"a" is 0 to 3, and b is 1 to 4, but here, a + b = 4.

As the coupling agent represented by the above General Formula (V), tin tetrachloride, $(R^5)SnCl_3$, $(R^5)_2SnCl_2$, $(R^5)_3SnCl$, and the like are preferred, and among them, tin tetrachloride is particularly preferred.

$(AM)Li(Q)_y$ ... (VI)

In the above General Formula (VI), y is 0 or 0.5 to 3, (Q) is a solubilizing component selected from the group consisting of hydrocarbons, ethers, amines, or mixtures thereof, and (AM) is represented by the following Formula (VII):

[Chem. 5]

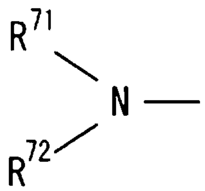

・・・(VII)

[In Formula (VII), $R^{71}$ and $R^{72}$ each independently represent an alkyl, cycloalkyl, or aralkyl group having 1 to 12 carbon atoms.] or the following Formula (VIII):

[Chem. 6]

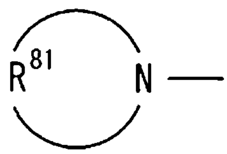

・・・(VIII)

[In Formula (VIII), $R^{81}$ represents an alkylene group having 3 to 16 methylene groups, a substituted alkylene having a linear or branched alkyl, cycloalkyl, bicycloalkyl, aryl, or aralkyl group having 1 to 12 carbon atoms as a substituent, an oxyethylene, or an N-alkylamino-alkylene group.]

By the presence of Q in the above General Formula (VI), the lithioamine becomes soluble in a hydrocarbon solvent. Q also includes dienyl or vinyl aromatic polymers or copolymers having a degree of polymerization of about 3 to about 300 polymer units. These polymers and copolymers include polybutadiene, polystyrene, polyisoprene, and copolymers thereof. Other examples of Q include polar ligands [for example, tetrahydrofuran (THF), tetramethylethylenediamine (TMEDA), and the like].

The lithioamine represented by the above General Formula (VI) may be used as a mixture with an organic alkali metal. The organic alkali metal is preferably selected from the group consisting of compounds represented by the general formula: $(R^{91})M$, $(R^{92})OM$, $(R^{93})C(O)OM$, $(R^{94})(R^{95})NM$, and $(R^{96})SO_3M$, where each of $(R^{91})$, $(R^{92})$, $(R^{93})$, $(R^{94})$, $(R^{95})$,

and ($R^{96}$) is independently selected from the group consisting of alkyl, cycloalkyl, alkenyl, aryl, and phenyl having about 1 to about 12 carbon atoms. The metal component M is selected from the group consisting of Na, K, Rb, and Cs. Preferably, M is Na or K.

The above mixture may preferably contain the organic alkali metal in a mixing ratio of about 0.5 to about 0.02 equivalents per 1 equivalent of lithium in the lithioamine.

Further, in the mixture of the above lithioamine and organic alkali metal, a chelating agent may be used as an aid to prevent uneven polymerization. Useful chelating agents include, for example, tetramethylethylenediamine (TMEDA), oxolanyl cyclic acetals, and cyclic oligomeric oxolanyl alkanes. Particularly preferred are cyclic oligomeric oxolanyl alkanes, and specific examples include 2,2-bis(tetrahydrofuryl)propane.

As the above vinylpyridine, examples include 2-vinylpyridine, 4-vinylpyridine, and the like.

Among the various modifiers described above, N,N-bis(trimethylsilyl)-3-[diethoxy(methyl)silyl]propylamine, N-(1,3-dimethylbutylidene)-3-triethoxysilyl-1-propanamine, 3-glycidoxypropyltrimethoxysilane, tetrakis(3-trimethoxysilylpropyl)-1,3-propanediamine, tin tetrachloride, the reaction product of hexamethyleneimine and n-butyllithium, 4-vinylpyridine, and 2-vinylpyridine are preferred.

In synthesizing the above styrene-butadiene rubber (SBR), a randomizer may also be used. The randomizer refers to a compound having the function of controlling the microstructure of a conjugated diene-based polymer, for example, increasing the 1,2-bond of the butadiene portion in styrene-butadiene, or controlling the compositional distribution of monomer units in a conjugated diene compound-aromatic vinyl compound copolymer, for example, randomizing the styrene units and butadiene units in styrene-butadiene rubber. When a randomizer is used in the synthesis of styrene-butadiene rubber, the ratio of randomizer to polymerization initiator [randomizer (mol)/polymerization initiator (mol)] is preferably 0.01 to 1.0, more preferably 0.05 to 0.8. As the polymerization initiator, an organolithium compound such as butyllithium can be used.

As the randomizer, any known compound generally used as a conventional randomizer may be appropriately selected and used. Specific examples include dimethoxybenzene, tetrahydrofuran, dimethoxyethane, diethylene glycol dibutyl ether, diethylene glycol dimethyl ether, oxolanylpropane oligomers [particularly those containing 2,2-bis(2-tetrahydrofuryl)propane], triethylamine, pyridine, N-methylmorpholine, N,N,N',N'-tetramethylethylenediamine, 1,2-dipiperidinoethane, and the like, which are ethers and tertiary amines. Potassium salts such as potassium tert-amylate and potassium tert-butoxide, and sodium salts such as sodium tert-amylate, may also be used.

The rubber composition for a tire of the present embodiment is further preferably characterized in that the above styrene-butadiene rubber contains styrene-butadiene rubber having a styrene content of 15 mass% or less. By applying a rubber composition containing styrene-butadiene rubber having a styrene content of 15 mass% or less to a tire, the wet gripping performance of the tire can be significantly improved. The styrene content is preferably 1 mass% or more, more preferably 3 mass% or more, and preferably 13 mass% or less, more preferably 11 mass% or less.

It should be noted that in the present specification, the styrene content of the styrene-butadiene rubber can be determined from the integration ratio of the $^{1}H$-NMR spectrum.

(Filler (B))

The rubber composition for a tire of the present embodiment contains a filler (B). By including the filler (B), the reinforcing property of the rubber composition for a tire is improved.

The content of the filler (B) in the rubber composition for a tire is preferably in the range of 40 to 125 parts by mass per 100 parts by mass of the rubber component (A). When the content of the filler (B) in the rubber composition for a tire is 40 parts by mass or more per 100 parts by mass of the rubber component (A), the reinforcement of the rubber composition for a tire is sufficient, the wear resistance of the tire can be improved, and when it is 125 parts by mass or less, the elastic modulus of the rubber composition for a tire does not become excessively high, and the wet gripping performance of the tire is improved. Further, from the viewpoint of improving the fuel efficiency of the tire, the content of the filler (B) in the rubber composition for a tire is more preferably 45 parts by mass or more, more preferably 50 parts by mass or more, and still more preferably 55 parts by mass or more per 100 parts by mass of the rubber component (A). Further, from the viewpoint of improving the wet gripping performance of the tire, the content of the filler (B) in the rubber composition for a tire is more preferably 110 parts by mass or less, more preferably 100 parts by mass or less, and still more preferably 90 parts by mass or less per 100 parts by mass of the rubber component (A).

- Silica -

The filler (B) includes plant-derived silica (B1). Since the plant-derived silica (B1) is a material derived from biological resources (biomass resources), by including the plant-derived silica (B1), the ratio of sustainable materials in the rubber composition for a tire is improved, and by applying the rubber composition to a tire, the ratio of sustainable materials in the tire can be improved and the environmental load can be reduced.

As the plant-derived silica (B1), from the viewpoint of reducing environmental load, silica derived from siliceous plants is preferred. Such siliceous plants are present, for example, in plants of the classes Bryopsida (mosses), Pteridopsida (ferns), Equisetopsida (horsetails), and families Cucurbitaceae, Urticaceae, and Poaceae (grasses). Among these plants, gramineous (Poaceae) plants are preferred, that is, as the plant-derived silica (B1), silica derived from gramineous plants is preferred. Silica derived from gramineous plants can be locally procured near tire manufacturing plants, so energy and cost for transportation and storage can be reduced, and from various viewpoints, it is environmentally preferable.

Further, as the gramineous plant, examples include rice, bamboo, sugarcane, and the like, and among these, rice is preferred. Since rice is widely cultivated for food, it can be locally procured in a wide area, and since rice husk is generated in large quantities as industrial waste, it is easy to secure the quantity. Therefore, from the viewpoint of ease of procurement, as the plant-derived silica (B1), silica derived from rice husk (hereinafter also referred to as "rice husk silica") is particularly preferred. By using the rice husk silica, rice husk, which becomes industrial waste, can be effectively utilized, and since the raw material can be locally procured near the tire manufacturing plant, energy and cost for transportation and storage can be reduced, and from various viewpoints, it is environmentally preferable. The rice husk silica may be a powder of rice husk charcoal obtained by carbonizing rice husk by heating, or may be a precipitated silica produced by preparing an alkali silicate aqueous solution by extracting rice husk ash generated when rice husk is combusted as fuel in a biomass boiler with alkali, and producing by a wet process using the alkali silicate aqueous solution. The method for producing the rice husk charcoal is not particularly limited, and various known methods can be used, for example, rice husk can be thermally decomposed by steaming in a kiln to obtain rice husk charcoal. The rice husk charcoal thus obtained can be pulverized using a known pulverizer (for example, a ball mill), and classified and sorted into a predetermined particle size range to obtain a powder of rice husk charcoal. Further, the precipitated silica derived from rice husk can be produced by the method described in JP 2019-38728 A or the like.

The ratio of the plant-derived silica (B1) in the filler (B) is 45 mass% or more. By setting the ratio of the plant-derived silica (B1) in the filler (B) to 45 mass% or more, the ratio of sustainable materials in the rubber composition for a tire is improved, and by applying the rubber composition to a tire, the ratio of sustainable materials in the tire can be improved.

The filler (B) may contain silica other than the above plant-derived silica (B1). Examples of such silica include wet silica (hydrous silicate), dry silica (anhydrous silicate), calcium silicate, aluminum silicate, and the like, and among these, wet silica is preferred because it has many silanol groups. These silicas other than the plant-derived silica (B1) may be used alone or in combination of two or more. As the silica other than the plant-derived silica (B1), commercial products can be used, and as commercial products of such silica, products from Tosoh Silica Corporation, Evonik, Solvay, Solvay Japan Co., Ltd., Tokuyama Corporation, and the like can be used.

Further, as the silica, from the viewpoint of reducing environmental load, it is also preferable to use silica manufactured by recycling, in which a silicate component is extracted from silicon wafer scraps used as raw materials for semiconductors or from glass bottles and the like, and used in production.

It is preferable that the plant-derived silica (B1) has a nitrogen adsorption specific surface area (BET method) of 80 $m^2/g$ or more and less than 330 $m^2/g$. When the nitrogen adsorption specific surface area (BET method) of the silica is 80 $m^2/g$ or more, the tire can be sufficiently reinforced and the rolling resistance can be sufficiently reduced. Further, when the nitrogen adsorption specific surface area (BET method) of the silica is less than 330 $m^2/g$, the elastic modulus of the tire does not become excessively high, and sufficient wet gripping performance can be obtained. From the viewpoint of further reducing the rolling resistance of the tire and improving wear resistance, it is more preferable that the nitrogen adsorption specific surface area (BET method) of the plant-derived silica (B1) is 100 $m^2/g$ or more, more preferably 130 $m^2/g$ or more, more preferably 150 $m^2/g$ or more, more preferably 170 $m^2/g$ or more, more preferably 180 $m^2/g$ or more, more preferably 190 $m^2/g$ or more, and still more preferably 195 $m^2/g$ or more. Further, from the viewpoint of further improving wet gripping performance, it is more preferable that the nitrogen adsorption specific surface area (BET method) of the plant-derived silica (B1) is 300 $m^2/g$ or less, more preferably 280 $m^2/g$ or less, and still more preferably 270 $m^2/g$ or less.

Note that, in the present specification, the nitrogen adsorption specific surface area ($N_2SA$) of silica is a value measured by the BET method in accordance with ASTM D3037-93.

The content of the plant-derived silica (B1) is preferably 40 parts by mass or more, more preferably 50 parts by mass or more, and still more preferably 55 parts by mass or more, per 100 parts by mass of the rubber component (A), from the viewpoint of improving the mechanical strength of the tire and reducing rolling resistance. Further, from the viewpoint of further improving wet gripping performance, the content of the plant-derived silica (B1) is preferably 90 parts by mass or less, more preferably 85 parts by mass or less, and still more preferably 80 parts by mass or less, per 100 parts by mass of the rubber component (A).

- Carbon Black -

It is preferable that the filler (B) includes carbon black. As the carbon black, plant-derived carbon black and carbon black obtained by recycling (that is, recovered carbon black) are particularly preferable. Examples of plant-derived carbon

black include those derived from, for example, castor oil and rosin oil. Examples of recovered carbon black include carbon black obtained by decomposition (particularly, thermal decomposition) of crosslinked rubber products such as used tires, carbon black obtained from waste oil, and the like.

As for the crosslinked rubber products used for the above decomposition, it is possible to group them in advance according to the type of rubber component blended, and then carry out the decomposition process for each group. Alternatively, it is possible to group them in advance according to the type of filler blended (for example, the type of carbon black, the type of silica, the mixing ratio of carbon black and silica, etc.), and then carry out the decomposition process for each group. Furthermore, it is also possible to perform both grouping by type of rubber component and grouping by type of filler, and then carry out the decomposition process for each group. When the decomposition process is performed for each group in this way, recovered carbon black having more uniform physical properties can be obtained, and when it is blended again into the rubber component, a rubber composition with better performance can be obtained.

Further, when the crosslinked rubber product used for the above decomposition is derived from a tire, it is possible to group them in advance according to the type of tire (for example, for passenger vehicles, for trucks and buses, for large vehicles such as off-road vehicles, for aircraft, for agricultural vehicles, etc.), and then carry out the decomposition process for each group. Alternatively, it is possible to group them in advance according to the type of tire member (for example, tread rubber, sidewall rubber, bead portion rubber, steel cord coating rubber, organic fiber coating rubber, pad rubber, cushion rubber, etc.), and then carry out the decomposition process for each group. Furthermore, it is also possible to perform both grouping by type of tire and grouping by type of tire member, and then carry out the decomposition process for each group. When the decomposition process is performed for each group in this way, recovered carbon black having more uniform physical properties can be obtained, and when it is blended again into the rubber component, a rubber composition with better performance can be obtained.

The grade of the carbon black is not particularly limited, and examples include N134, N110, N220, N234, N219, N339, N330, N326, N351, N550, N762, and the like. As the carbon black, commercially available products can be used, and as commercial products of such carbon black, products from Asahi Carbon Co., Ltd., Cabot Japan K.K., Tokai Carbon Co., Ltd., Mitsubishi Chemical Corporation, Lion Corporation, Nippon Steel Carbon Co., Ltd., Birla Carbon, and the like can be used. These carbon blacks may be used alone or in combination of two or more kinds.

The nitrogen adsorption specific surface area ($N_2SA$) of the carbon black is not particularly limited, and can be appropriately adjusted, for example, according to the tire category, tire member, target performance, and the like. For example, the nitrogen adsorption specific surface area ($N_2SA$) of the carbon black is preferably 20 $m^2/g$ or more, more preferably 50 $m^2/g$ or more, more preferably 70 $m^2/g$ or more, still more preferably 90 $m^2/g$ or more, and preferably 200 $m^2/g$ or less, more preferably 150 $m^2/g$ or less, and still more preferably 130 $m^2/g$ or less.

Note that, in the present specification, the nitrogen adsorption specific surface area ($N_2SA$) of carbon black is determined in accordance with JIS K 6217-2:2017 (ISO 4652:2012).

The content of the carbon black is preferably 1 part by mass or more, more preferably 3 parts by mass or more, and still more preferably 5 parts by mass or more, per 100 parts by mass of the rubber component (A), from the viewpoint of improving the wear resistance of the tire. Further, from the viewpoint of operability of the rubber composition, the content of carbon black is preferably 20 parts by mass or less, and more preferably 15 parts by mass or less, per 100 parts by mass of the rubber component (A).

It is preferable that the silica accounts for 50 mass% or more and less than 100 mass% of the total amount of silica and carbon black. By satisfying such a range, it is possible to highly balance wet gripping performance and high fuel efficiency. Further, from the viewpoint of further improving the balance between wet gripping performance and high fuel efficiency, it is more preferable that the silica accounts for 70 mass% or more and less than 100 mass%, more preferably 80 mass% or more and less than 100 mass%, and still more preferably 90 mass% or more and less than 100 mass% of the total amount of silica and carbon black.

As the filler (B), in addition to the above-mentioned silica and carbon black, calcium carbonate, talc, alumina, clay, aluminum hydroxide, mica, and the like can be mentioned.

(Resin (C))

The rubber composition for a tire of the present embodiment contains a resin (C). By including the resin (C) in the rubber composition for a tire, the wet gripping performance and high fuel efficiency of the tire can be improved. Examples of the resin (C) include terpene-based resin, rosin-based resin, $C_5$-based resin, $C_5/C_9$-based resin, $C_9$-based resin, cyclopentadiene-based resin, aromatic-based resin, coumarone resin, indene resin, coumarone/indene-based resin, olefin-based resin, polyurethane resin, acrylic resin, and the like. These resins (C) may be used alone or in combination of two or more kinds. Among these resins (C), terpene-based resin, rosin-based resin, $C_5$-based resin, $C_5/C_9$-based resin, $C_9$-based resin, cyclopentadiene-based resin, and aromatic-based resin are preferable, and terpene-based resin and rosin-based resin are particularly preferable. Since terpene-based resin and rosin-based resin are sustainable resins of natural origin, environmental impact can be further reduced, and tire performance such as gripping performance on

various road surface conditions including dry road surfaces, wet road surfaces, snow-covered road surfaces, and icy road surfaces can be further improved. Further, $C_5$-based resin, $C_9$-based resin, $C_5/C_9$-based resin, and cyclopentadiene-based resin can improve wear resistance and high fuel efficiency in a well-balanced manner. Further, aromatic-based resin can improve gripping performance, wear resistance, and rubber strength in a well-balanced manner.

The resin (C) may be hydrogenated, that is, may be a hydrogenated resin. Further, the resin (C) may have a functional group introduced by modification, which interacts with fillers such as carbon black and silica. Examples of such functional groups include amino group, amide group, isocyanate group, imino group, imidazole group, urea group, ammonium group, imide group, hydrazo group, azo group, diazo group, carboxyl group, nitrile group, pyridyl group, alkoxy group, hydroxyl group, oxy group, epoxy group, ether group, carbonyl group, oxycarbonyl group, silyl group, alkoxy silyl group, mercapto group, sulfide group, disulfide group, sulfonyl group, sulfinyl group, thiocarbonyl group, and the like.

The terpene-based resin is a solid resin obtained by compounding turpentine oil, which is obtained simultaneously with rosin from pine trees, or a polymerized component separated therefrom, and polymerizing it using a Friedel-Crafts catalyst, and includes β-pinene resin, α-pinene resin, and the like. The terpene-based resin also includes terpene/aromatic compound-based resins, and representative examples of such terpene/aromatic compound-based resins include terpene-phenol resin, styrene-terpene resin, and the like. The terpene-phenol resin can be obtained by reacting terpenes and various phenols using a Friedel-Crafts catalyst, or further condensing with formalin. The styrene-terpene resin can be obtained by reacting styrene and terpenes using a Friedel-Crafts catalyst. The raw material terpenes are not particularly limited, but monoterpene hydrocarbons such as α-pinene and limonene are preferable, those containing α-pinene are more preferable, and α-pinene is particularly preferable.

As the rosin-based resin, examples of natural resin rosin include gum rosin, tall oil rosin, wood rosin, and the like, which are contained in raw rosin and tall oil, and as modified rosin, rosin derivatives, and modified rosin derivatives, examples include polymerized rosin and its partially hydrogenated rosin; glycerin ester rosin, its partially hydrogenated rosin and completely hydrogenated rosin; pentaerythritol ester rosin, its partially hydrogenated rosin and polymerized rosin; and the like.

As the $C_5$-based resin, there can be mentioned aliphatic petroleum resin obtained by (co)polymerizing a $C_5$ fraction obtained by thermal cracking of naphtha in the petrochemical industry. The $C_5$ fraction usually contains olefinic hydrocarbons such as 1-pentene, 2-pentene, 2-methyl-1-butene, 2-methyl-2-butene, 3-methyl-1-butene, and diolefinic hydrocarbons such as 2-methyl-1,3-butadiene, 1,2-pentadiene, 1,3-pentadiene, 3-methyl-1,2-butadiene, and the like.

The $C_5/C_9$-based resin refers to a $C_5/C_9$-based synthetic petroleum resin, and examples of the $C_5$-$C_9$ resin include solid polymers obtained by polymerizing a $C_5$-$C_{11}$ fraction derived from petroleum using a Friedel-Crafts catalyst such as $AlCl_3$ or $BF_3$, and more specifically, copolymers mainly composed of styrene, vinyltoluene, α-methylstyrene, indene, and the like. As the $C_5/C_9$-based resin, a resin containing a small amount of $C_9$ or higher components is preferable from the viewpoint of compatibility with the rubber component. Here, "containing a small amount of $C_9$ or higher components" means that the content of $C_9$ or higher components in the total amount of the resin is less than 50 mass%, preferably 40 mass% or less.

The $C_9$-based resin refers to a $C_9$-based synthetic petroleum resin, and refers to a solid polymer obtained by polymerizing a $C_9$ fraction using a Friedel-Crafts catalyst such as $AlCl_3$ or $BF_3$. Examples of the $C_9$ resin include copolymers mainly composed of indene, α-methylstyrene, vinyltoluene, and the like.

The cyclopentadiene-based resin refers to a resin containing a unit derived from a cyclopentadiene monomer as a monomer unit. Examples of the cyclopentadiene-based resin include a homopolymer of a cyclopentadiene monomer, a copolymer of two or more cyclopentadiene monomers, a copolymer of a cyclopentadiene monomer and another monomer, and the like. Here, as the cyclopentadiene monomer, cyclopentadiene, dicyclopentadiene, tricyclopentadiene, and the like can be mentioned, among which dicyclopentadiene is preferable, that is, as the cyclopentadiene resin, dicyclopentadiene resin is preferable. The dicyclopentadiene-based resin refers to a resin obtained by polymerizing dicyclopentadiene using, for example, a Friedel-Crafts catalyst such as $AlCl_3$ or $BF_3$. Examples of the dicyclopentadiene-based resin include a homopolymer of dicyclopentadiene, a copolymer of dicyclopentadiene and an aromatic monomer, a copolymer of dicyclopentadiene and a $C_9$ fraction (vinyltoluene, indene, etc.), and the like.

The aromatic-based resin refers to a resin containing a unit derived from an aromatic monomer as a monomer unit. Examples of the aromatic-based resin include a homopolymer of an aromatic monomer, a copolymer of two or more aromatic monomers, a copolymer of an aromatic monomer and another monomer, and the like. Here, as the aromatic monomer, styrene-based monomers such as styrene, o-methylstyrene, m-methylstyrene, p-methylstyrene, α-methylstyrene, p-methoxystyrene, p-tert-butylstyrene, o-chlorostyrene, m-chlorostyrene, p-chlorostyrene, p-phenylstyrene; phenol-based monomers such as phenol, alkylphenol, alkoxyphenol; naphthol-based monomers such as naphthol, alkylnaphthol, alkoxynaphthol; and the like can be mentioned.

The resin (C) preferably has a softening point of 30°C or higher, more preferably 60°C or higher, more preferably 80°C or higher, more preferably higher than 110°C, more preferably 116°C or higher, more preferably 120°C or higher, more preferably 123°C or higher, and still more preferably 127°C or higher. Further, from the viewpoint of processability, the resin (C) preferably has a softening point of 160°C or lower, more preferably 150°C or lower, more preferably 145°C or

lower, more preferably 141°C or lower, and still more preferably 136°C or lower.

Note that, in the present specification, the softening point of the resin (C) is the softening point as defined in JIS K 6220-1:2015 (ISO 28641:2010), measured using a ring-and-ball softening point measuring device, and is the temperature at which the ball drops.

As the resin (C), commercially available products can be used, and as commercial products of such resin, products from, for example, ENEOS Corporation, Arakawa Chemical Industries, Ltd., ExxonMobil, Kraton Corporation, Yasuhara Chemical Co., Ltd., Maruzen Petrochemical Co., Ltd., Sumitomo Bakelite Co., Ltd., Tosoh Corporation, Rutgers Chemicals, BASF, Kraton Polymers LLC, Nitto Chemical Industry Co., Ltd., Nippon Shokubai Co., Ltd., Taoka Chemical Co., Ltd., and the like can be used.

The content of the resin (C) is not particularly limited, and can be appropriately adjusted, for example, according to the tire category, tire member, target performance, and the like. For example, the content of the resin (C) is preferably in the range of 1 to 50 parts by mass, and more preferably in the range of 10 to 40 parts by mass, per 100 parts by mass of the rubber component (A). When the content of the resin (C) is 1 to 50 parts by mass per 100 parts by mass of the rubber component (A), the wet gripping performance and high fuel efficiency of the tire can be further enhanced, and the exudation of the resin from the tire can be suppressed, thereby suppressing deterioration of the tire appearance.

It is preferable that the resin (C) is a hydrogenated resin (hereinafter, sometimes referred to as "hydrogenated resin") having a softening point higher than 110°C and a polystyrene-equivalent weight-average molecular weight of 200 to 1600 g/mol. By including such a hydrogenated resin in the rubber composition for a tire, the wet gripping performance and high fuel efficiency of the tire can be further improved. As the resin serving as the raw material for the hydrogenated resin, the above-mentioned $C_5$-based resin, $C_5/C_9$-based resin, $C_9$-based resin, terpene-based resin, dicyclopentadiene-based resin, terpene/aromatic compound-based resin, and the like can be mentioned, and these resins may be used alone or in combination of two or more kinds.

When the softening point of the hydrogenated resin is higher than 110°C, the tire can be sufficiently reinforced and the rolling resistance can be reduced. From the viewpoint of further reducing rolling resistance, it is preferable that the softening point of the hydrogenated resin is 115°C or higher, more preferably 118°C or higher, still more preferably 123°C or higher, and even more preferably 127°C or higher. Further, from the viewpoint of wet gripping performance, it is preferable that the softening point of the hydrogenated resin is 145°C or lower, more preferably 138°C or lower, and even more preferably 133°C or lower.

When the polystyrene-equivalent weight-average molecular weight of the hydrogenated resin is 200 g/mol or more, it becomes difficult for the hydrogenated resin to precipitate from the tire, and the effects of the hydrogenated resin can be sufficiently exhibited. Furthermore, when it is 1600 g/mol or less, the hydrogenated resin can be sufficiently compatible with the rubber component (A).

From the viewpoint of suppressing precipitation of the hydrogenated resin from the tire and suppressing deterioration of the tire appearance, it is preferable that the polystyrene-equivalent weight-average molecular weight of the hydrogenated resin is 500 g/mol or more, more preferably 550 g/mol or more, still more preferably 600 g/mol or more, still more preferably 650 g/mol or more, still more preferably 700 g/mol or more, and even more preferably 750 g/mol or more. Further, from the viewpoint of enhancing the compatibility of the hydrogenated resin with the rubber component (A) and further enhancing the effects of the hydrogenated resin, it is more preferable that the polystyrene-equivalent weight-average molecular weight of the hydrogenated resin is 1400 g/mol or less, more preferably 1350 g/mol or less, still more preferably 1300 g/mol or less, still more preferably 1250 g/mol or less, still more preferably 1200 g/mol or less, still more preferably 1150 g/mol or less, still more preferably 1100 g/mol or less, still more preferably 1050 g/mol or less, still more preferably 1000 g/mol or less, and even more preferably 950 g/mol or less.

Note that the weight-average molecular weight can be measured, for example, by measuring the average molecular weight of the hydrogenated resin by gel permeation chromatography (GPC) under the following conditions and calculating the polystyrene-equivalent weight-average molecular weight.

- Column temperature: 40°C
- Injection volume: 50 μL
- Carrier and flow rate: tetrahydrofuran 0.6 mL/min
- Sample preparation: about 2.5 mg of resin component dissolved in 10 mL of tetrahydrofuran

The ratio of the softening point (TsHR) (units: °C) of the hydrogenated resin to the polystyrene-equivalent weight-average molecular weight (MwHR) (units: g/mol) of the hydrogenated resin is preferably 0.15 or more [$0.15 \leq$ (TsHR/MwHR)]. The (TsHR/MwHR) is more preferably 0.08 or more, still more preferably 0.09 or more, still more preferably 0.098 or more, still more preferably 0.102 or more, still more preferably 0.11 or more, still more preferably 0.12 or more, still more preferably 0.14 or more, still more preferably 0.155 or more, still more preferably 0.158 or more, still more preferably 0.160 or more, and even more preferably 0.162 or more. Further, it is preferable that (TsHR/MwHR) is 0.2 or less, more preferably 0.185 or less, still more preferably 0.178 or less, still more preferably 0.172 or less, still more

preferably 0.168 or less, and even more preferably 0.163 or less.

From the viewpoint of further enhancing the effects of the hydrogenated resin, it is preferable that the content of the hydrogenated resin is 5 parts by mass or more, more preferably 7 parts by mass or more, and even more preferably 9 parts by mass or more, per 100 parts by mass of the rubber component (A). Further, from the viewpoint of suppressing precipitation of the hydrogenated resin from the tire and suppressing deterioration of the tire appearance, it is preferable that the content of the hydrogenated resin is 50 parts by mass or less, more preferably 40 parts by mass or less, and even more preferably 30 parts by mass or less, per 100 parts by mass of the rubber component (A).

The resin serving as the raw material for the hydrogenated resin may, for example, include a resin obtained by copolymerizing a $C_5$ fraction and dicyclopentadiene (DCPD) ($C_5$-DCPD resin). Here, when the content of the dicyclopentadiene-derived component in the total amount of resin is 50 mass% or more, the $C_5$-DCPD resin is included in the dicyclopentadiene resin. When the content of the dicyclopentadiene-derived component in the total amount of resin is less than 50 mass%, the $C_5$-DCPD resin is included in the $C_5$ resin. The same applies even when a small amount of a third component is copolymerized.

From the viewpoint of enhancing the compatibility between the rubber component (A) and the hydrogenated resin, further improving wet gripping performance, and further reducing rolling resistance, it is preferable that the hydrogenated resin is at least one selected from the group consisting of hydrogenated $C_5$-based resin, hydrogenated $C_5/C_9$-based resin, and hydrogenated dicyclopentadiene-based resin (hydrogenated DCPD resin), more preferably at least one selected from the group consisting of hydrogenated $C_5$-based resin and hydrogenated $C_5/C_9$-based resin, and even more preferably hydrogenated $C_5$-based resin. It is also preferable that the resin is a resin having at least a hydrogenated DCPD structure or a hydrogenated cyclic structure in the monomer.

(Nonionic Surfactant)

The rubber composition for a tire of the present embodiment may contain a nonionic surfactant. The nonionic surfactant improves the high fuel efficiency and wear resistance of the resulting rubber composition for a tire. As the nonionic surfactant, at least one selected from among polyhydric alcohol type, polyoxyethylene alkyl ether type, polyoxyethylene alkylphenyl ether type, polyoxyethylene polyoxypropylene glycol type, polyethylene glycol type, glycoside type, and fatty acid alkanolamide type can be used. In the rubber composition for a tire of the present embodiment, the nonionic surfactant may be used alone or in combination of two or more types.

As the polyhydric alcohol type in the nonionic surfactant, examples include fatty acid esters of glycerin (glycerol), fatty acid esters of pentaerythritol, fatty acid esters of polyoxyethylene sorbitan, fatty acid esters of polyoxyethylene sorbit, and fatty acid esters of sorbitan. Specific examples include palm oil-derived hardened fatty acid glycerin, lipophilic monostearin glycerin, self-emulsifying monostearin glycerin, lipophilic monoolein glycerin, monocaprylic acid glycerin, monostearin propylene glycol, monostearin sorbitan, monoolein sorbitan, sesquioleic acid sorbitan, coconut oil fatty acid sorbitan, monopalmitin sorbitan, tristearin sorbitan, triolein sorbitan, monolaurin polyoxyethylene sorbitan, monopalmitin polyoxyethylene sorbitan, monostearin polyoxyethylene sorbitan, tristearin polyoxyethylene sorbitan, monoolein polyoxyethylene sorbitan, triolein polyoxyethylene sorbitan, triisostearin polyoxyethylene sorbitan, tetraolein polyoxyethylene sorbit, and the like.

As the polyoxyethylene alkyl ether type, examples include mono- or dialkyl or alkenyl ethers of polyoxyethylene. Specific examples include polyoxyethylene lauryl ether, polyoxyethylene cetyl ether, polyoxyethylene stearyl ether, polyoxyethylene oleyl ether, polyoxyethylene octyldodecyl ether, and the like.

As the polyoxyethylene alkylphenyl ether type, at least one selected from among polyoxyethylene benzylphenyl ether, polyoxyethylene tribenzylphenyl ether, and polyoxyethylene distyrenated phenyl ether can be mentioned.

As the polyoxyethylene polyoxypropylene glycol type, at least one selected from among polyoxyethylene polyoxypropylene glycol and its mono- or di-fatty acid esters can be mentioned.

As the polyethylene glycol type, examples include mono- or di-fatty acid esters of polyethylene glycol. Specific examples include polyethylene glycol monolaurate, polyethylene glycol monostearate, polyethylene glycol distearate, and the like.

As the glycoside type, examples include alkyl glucosides having 8 to 20 carbon atoms in the alkyl group. Specific examples include decyl glucoside, lauryl glucoside, and the like.

As the fatty acid alkanolamide type, examples include fatty acid diethanolamides and fatty acid N-alkylethanolamides. Specific examples include palm kernel oil fatty acid diethanolamide, lauric acid diethanolamide, coconut oil fatty acid N-methylethanolamide, and the like.

Other preferable nonionic surfactants in the rubber composition for a tire of the present embodiment include polyoxyethylene hydrogenated castor oil, isostearyl glyceryl ether, and the like.

Among these nonionic surfactants, a preferable one is a glycerin fatty acid ester. As the fatty acid ester of glycerin, it is more preferable that the number of carbon atoms in the fatty acid is 8 to 28, and that it contains both glycerin fatty acid monoester and glycerin fatty acid diester, with the content of the glycerin fatty acid monoester being 40 to 100 mass%.

The content of the nonionic surfactant in the rubber composition for a tire of the present embodiment is preferably 0.1 part by mass or more and 7 parts by mass or less, more preferably 0.2 part by mass or more and 6 parts by mass or less, and even more preferably 0.3 part by mass or more and 5 parts by mass or less, per 100 parts by mass of the rubber component (A), from the viewpoint of sufficiently improving high fuel efficiency and wear resistance.

Further, in the rubber composition for a tire of the present embodiment, the mass ratio (hydrogenated resin/nonionic surfactant) of the hydrogenated resin to the nonionic surfactant is preferably 0.7 to 500, more preferably 1 to 30, and even more preferably 5 to 20. By satisfying such a range, it is possible to achieve both wet gripping performance and high fuel efficiency at a higher level.

(Silane Coupling Agent)

The rubber composition for a tire of the present embodiment preferably contains a silane coupling agent in order to enhance the effect of the plant-derived silica (B1). Examples of the silane coupling agent include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzothiazolyltetrasulfide, 3-triethoxysilylpropyl methacrylate monosulfide, 3-trimethoxysilylpropyl methacrylate monosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, dimethoxymethylsilylpropylbenzothiazolyltetrasulfide, and the like. Commercial products can be used as the silane coupling agent, and as commercial products of the silane coupling agent, for example, products from Evonik, Momentive, Shin-Etsu Silicone Co., Ltd., Dow Corning Toray Co., Ltd., Tokyo Chemical Industry Co., Ltd., Azmax Co., Ltd., and the like can be used. These silane coupling agents may be used alone or in combination of two or more types.

Note that bioethanol can also be used as a raw material for the silane coupling agent. Bioethanol is produced mainly from saccharides and/or cellulose as biological resources, and other biological resources such as proteins, lipids, and amino acids cannot be effectively utilized. Furthermore, saccharides compete with food, and excessive use of cellulose leads to deforestation. Therefore, depending on the supply situation of various biological resources, the supply situation of recycled resources, the supply situation of fossil resources, and market demands (for example, demand for biomass resources as food), it is preferable to use a plurality of types of ethanol derived from biological resources (bioethanol) as raw materials for the silane coupling agent, or to use a combination of ethanol derived from biological resources (bioethanol), ethanol derived from recycled resources, and ethanol derived from fossil resources. In this way, it is possible to effectively utilize a wide range of biological resources such as sugars, proteins, and lipids, as well as recycled resources, without relying on a single type of biological resource, and to take environmental considerations into account according to the manufacturing situation.

The content of the silane coupling agent can be appropriately adjusted depending on, for example, the tire category to which it is applied, the tire member, target performance, and the like. For example, the content of the silane coupling agent is preferably 1 part by mass or more, more preferably 6 parts by mass or more, and further preferably 20 parts by mass or less, more preferably 15 parts by mass or less, still more preferably 12 parts by mass or less, and even more preferably 10 parts by mass or less, per 100 parts by mass of the plant-derived silica (B1) (or the total amount of silica).

(Rubber Powder)

The rubber composition for a tire of the present embodiment may contain rubber powder. The rubber powder may be obtained by pulverizing used rubber products such as used tires, and, if desired, removing reinforcing members such as steel materials and fibers, dust, glass, sand, stones, and the like, or by preparing a newly vulcanized rubber composition for the purpose of producing rubber powder and pulverizing it. For example, rubber powder can be obtained from vulcanized rubber by the method described in "Rubber Chemistry And Technology." In the process of pulverizing vulcanized rubber to obtain rubber powder, mechanical treatment or low-temperature treatment may be used. For example, in mechanical treatment, various crushing devices such as cracker mills and granulators can be used to mechanically pulverize vulcanized rubber into fine particles. In low-temperature treatment, finely chopped vulcanized rubber is frozen at extremely low temperatures and then pulverized into fine particles. For removal of steel materials, magnetic separators and the like can be used, and for removal of fibers, air classifiers and the like can be used. Commercial products can also be used as the rubber powder, and as commercial products of the rubber powder, products from Global Corporation or Nantong Huili Rubber Corporation and the like can be mentioned. From the viewpoint of reducing environmental load, it is preferable to use rubber powder obtained by pulverizing used rubber products such as used tires. The rubber powder may be used

alone or in combination of two or more types.

The composition of the rubber powder is not particularly limited and depends on the composition of the vulcanized rubber of the used rubber product (used tire) serving as the raw material. In one embodiment, the rubber powder contains a rubber component, carbon black, silica, and the like. The rubber component, carbon black, silica, and the like contained in the rubber powder may be the same as or different from the rubber component, carbon black, silica, and the like contained in the above-described rubber composition for a tire of the present embodiment.

It is preferable that the volume-average particle diameter of the rubber powder is 1000 μm or less, more preferably 500 μm or less, still more preferably 200 μm or less, and even more preferably 100 μm or less. The smaller the volume-average particle diameter of the rubber powder, the better, and the lower limit is not particularly limited.

Note that in the present specification, the volume-average particle diameter is measured with a laser diffraction particle size distribution measuring device, and, for example, can be measured using "CAPA500" manufactured by HORIBA, Ltd.

It is preferable that the 60-mesh sieve residue of the rubber powder is less than 1 mass%, more preferably 0.5 mass% or less, still more preferably 0.1 mass% or less, and the lower limit is not particularly limited. Further, it is preferable that the 80-mesh sieve residue of the rubber powder is less than 10 mass%, more preferably 1 mass% or less, still more preferably 0.5 mass% or less, and the lower limit is not particularly limited.

Note that in the present specification, the sieve residue is measured in accordance with ASTM D5644-01.

It is preferable that the rubber powder has an acetone extract content of 12 mass% or less, more preferably 11 mass% or less, still more preferably 10 mass% or less, and further, it is preferable that the acetone extract content is 1 mass% or more, more preferably 2 mass% or more, and still more preferably 3 mass% or more.

Note that, in the present specification, the acetone extract content in the rubber powder refers to the acetone extract content (%) determined by the acetone extraction method in accordance with JIS K6350.

The content of the rubber powder is not particularly limited and may be appropriately adjusted, for example, depending on the target tire category, tire member, target performance, and the like. For example, the content of the rubber powder is preferably 1 part by mass or more, more preferably 2 parts by mass or more, still more preferably 3 parts by mass or more, and also preferably 200 parts by mass or less, more preferably 150 parts by mass or less, still more preferably 100 parts by mass or less, even more preferably 50 parts by mass or less, still more preferably 30 parts by mass or less, further preferably 15 parts by mass or less, even more preferably 10 parts by mass or less, and particularly preferably 5 parts by mass or less, per 100 parts by mass of the rubber component (A).

(Liquid Softener)

The rubber composition for a tire of the present embodiment may contain a liquid softener. Here, the term "liquid softener" refers to a compounding agent that is liquid at 25°C (room temperature) and has the function of softening the rubber composition. The liquid softener is not particularly limited, and examples include oils, liquid polymers, and the like, with oils being preferred among these. These liquid softeners may be used alone or in combination of two or more.

The term "oil" is a general term for extender oils contained in the rubber component and liquid oil components added as compounding agents in the rubber composition, and examples include vegetable oils, process oils, oils obtained by recycling vegetable oils or process oils, or mixtures thereof. From the viewpoint of reducing environmental impact, vegetable oils and oils obtained by recycling are preferred as the oil. Examples of the vegetable oil include palm oil, castor oil, cottonseed oil, soybean oil, linseed oil, rapeseed oil, Cocos nucifera oil, peanut oil, pine oil, pine tar, tall oil, corn oil, rice bran oil, safflower oil, sesame oil, olive oil, sunflower oil, palm kernel oil, camellia oil, jojoba oil, macadamia nut oil, tung oil, coconut oil, and the like. Examples of the process oil include, for example, paraffinic process oil, aromatic process oil, naphthenic process oil, and the like. Commercially available products can be used as the oil, and examples of commercially available oils include products from Idemitsu Kosan Co., Ltd., SANKYO YUKA KOGYO K.K., ENEOS Corporation, Orisoy, H&R, HOKOKU OIL CO., LTD., Nisshin OilliO Group, Ltd., and the like. These oils may be used alone or in combination of two or more.

As the liquid polymer, a liquid diene-based polymer is preferred. Examples of the liquid diene-based polymer include liquid styrene-butadiene copolymer (liquid SBR), liquid polybutadiene (liquid BR), liquid polyisoprene (liquid IR), liquid styrene-isoprene copolymer (liquid SIR), liquid styrene-butadienestyrene block copolymer (liquid SBS block polymer), liquid styrene-isoprene-styrene block copolymer (liquid SIS block polymer), liquid polyfarnesene, liquid farnesene-butadiene copolymer, and the like. These liquid polymers may be hydrogenated, and the terminals or main chain may be modified with functional groups (polar groups). These liquid polymers may be used alone or in combination of two or more.

The content of the liquid softener is not particularly limited and may be appropriately adjusted, for example, depending on the target tire category, tire member, target performance, and the like. For example, the content of the liquid softener is preferably 5 parts by mass or more, more preferably 10 parts by mass or more, and also preferably 100 parts by mass or less, more preferably 70 parts by mass or less, still more preferably 50 parts by mass or less, and even more

preferably 30 parts by mass or less, per 100 parts by mass of the rubber component (A).

(Antioxidant)

The rubber composition for a tire of the present embodiment may contain an antioxidant. Examples of the antioxidant include N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-bis(1-ethyl-3-methylpentyl)-p-phenylenediamine, 2,2,4-trimethyl-1,2-dihydroquinoline polymer (TMDQ), 6-ethoxy-2,2,4-trimethyl-1,2-dihydroquinoline (AW), 6-anilino-2,2,4-trimethyl-1,2-dihydroquinoline, and the like. Commercially available products can be used as the antioxidant, and examples of commercially available antioxidants include products from Ouchi Shinko Chemical Industrial Co., Ltd., Sumitomo Chemical Co., Ltd., Seiko-Chemical Co., Ltd., Flexsys, and the like. These antioxidants may be used alone or in combination of two or more.

The content of the antioxidant is not particularly limited and may be appropriately adjusted, for example, depending on the target tire category, tire member, target performance, and the like. For example, the content of the antioxidant is preferably 1 part by mass or more, more preferably 1.5 parts by mass or more, still more preferably 2 parts by mass or more, and also preferably 12 parts by mass or less, more preferably 10 parts by mass or less, and still more preferably 8 parts by mass or less, per 100 parts by mass of the rubber component (A).

(Wax)

The rubber composition for a tire of the present embodiment may contain wax. Examples of the wax include, for example, natural waxes such as plant-based waxes and animal-based waxes; petroleum-based waxes such as paraffin wax and microcrystalline wax; synthetic waxes such as ethylene polymers and propylene polymers; and the like. Commercially available products can be used as the wax, and examples of commercially available waxes include products from Seiko-Chemical Co., Ltd., Nippon Seiro Co., Ltd., Ouchi Shinko Chemical Industrial Co., Ltd., and the like. These waxes may be used alone or in combination of two or more.

The content of the wax is not particularly limited and may be appropriately adjusted, for example, depending on the target tire category, tire member, target performance, and the like. For example, the content of the wax is preferably 0.5 part by mass or more, more preferably 1 part by mass or more, and also preferably 10 parts by mass or less, more preferably 6 parts by mass or less, per 100 parts by mass of the rubber component (A).

(Stearic Acid)

The rubber composition for a tire of the present embodiment may contain stearic acid. Commercially available products can be used as the stearic acid, and examples of commercially available stearic acid include products from NOF Corporation, Kao Corporation, FUJIFILM Wako Pure Chemical Corporation, Chiba Fatty Acid Co., Ltd., and the like. These commercially available stearic acids may be used alone or in combination of two or more.

The content of the stearic acid is not particularly limited and may be appropriately adjusted, for example, depending on the target tire category, tire member, target performance, and the like. For example, the content of the stearic acid is preferably 1 part by mass or more, and also preferably 10 parts by mass or less, more preferably 6 parts by mass or less, per 100 parts by mass of the rubber component (A).

(Zinc Oxide)

The rubber composition for a tire of the present embodiment may contain zinc oxide (zinc white). As the zinc oxide, not only zinc oxide obtained from zinc ingot but also zinc oxide obtained from recycled zinc or zinc dross (i.e., obtained by recycling) is preferred. Commercially available products can be used as the zinc oxide, and examples of commercially available zinc oxide include products from Hakusui Tech Co., Ltd., Seido Chemical Industry Co., Ltd., Sakai Chemical Industry Co., Ltd., Mitsui Mining & Smelting Co., Ltd., Toho Zinc Co., Ltd., and the like. These commercially available zinc oxides may be used alone or in combination of two or more.

The content of the zinc oxide is not particularly limited and may be appropriately adjusted, for example, depending on the target tire category, tire member, target performance, and the like. For example, the content of the zinc oxide is preferably 1 part by mass or more, more preferably 2 parts by mass or more, and also preferably 10 parts by mass or less, more preferably 6 parts by mass or less, per 100 parts by mass of the rubber component (A).

(Sulfur)

It is preferable that the rubber composition for a tire of the present embodiment contains sulfur. As the sulfur, those

derived from fossil resources, those derived from recycled resources, those obtained by processing biological resource-derived materials, and the like can be used, and from the viewpoint of reducing environmental impact, it is particularly preferable to use sulfur obtained from waste derived from biological resources. As a method for obtaining sulfur from waste derived from biological resources, for example, the method described in the above-mentioned Japanese Patent Application No. 2022-140390 can be cited. Further, as the sulfur, powdered sulfur, precipitated sulfur, colloidal sulfur, insoluble sulfur, highly dispersible sulfur, soluble sulfur, and the like, which are generally used as crosslinking agents in the rubber industry, may be used. Commercially available products can be used as the sulfur, and examples of commercially available sulfur include products from Tsurumi Chemical Industry Co., Ltd., Hosoi Chemical Industry Co., Ltd., Karuizawa Sulfur Co., Ltd., Shikoku Chemicals Corp., Flexsys, and the like. These sulfurs may be used alone or in combination of two or more.

The content of the sulfur is not particularly limited and may be appropriately adjusted, for example, depending on the target tire category, tire member, target performance, and the like. For example, the content of the sulfur is preferably 0.3 part by mass or more, more preferably 0.5 part by mass or more, still more preferably 0.8 part by mass or more, and also preferably 8 parts by mass or less, more preferably 5 parts by mass or less, per 100 parts by mass of the rubber component (A).

(Vulcanization Accelerator)

It is preferable that the rubber composition for a tire of the present embodiment contains a vulcanization accelerator. The vulcanization accelerator can be used regardless of whether it is derived from fossil resources, recycled resources, or biological resources, but from the viewpoint of reducing environmental impact, it is preferable that it is derived from biological resources. The vulcanization accelerator derived from biological resources can be obtained, for example, by the method disclosed in JP 2005-139239 A.

Examples of the vulcanization accelerator include sulfenamide-based vulcanization accelerators such as N-cyclohexyl-2-benzothiazolylsulfenamide (CBS), N,N-dicyclohexyl-2-benzothiazolylsulfenamide, N-tert-butyl-2-benzothiazolylsulfenamide (TBBS), N-oxyethylene-2-benzothiazolesulfenamide, N,N'-diisopropyl-2-benzothiazolesulfenamide; guanidine-based vulcanization accelerators such as 1,3-diphenylguanidine (DPG), 1,3-di-o-tolylguanidine, o-tolylbiguanidine; thiazole-based vulcanization accelerators such as 2-mercaptobenzothiazole (M), di-2-benzothiazolyl disulfide (MBTS, DM); thiuram-based vulcanization accelerators such as tetramethylthiuram disulfide (TMTD), tetrastearylthiuram disulfide, tetrabenzylthiuram disulfide (TBzTD), tetrakis(2-ethylhexyl)thiuram disulfide (TOT-N); and the like. Commercially available products can be used as the vulcanization accelerator, and examples of commercially available vulcanization accelerators include products from Ouchi Shinko Chemical Industrial Co., Ltd., Sumitomo Chemical Co., Ltd., and the like. These vulcanization accelerators may be used alone or in combination of two or more.

The content of the vulcanization accelerator is not particularly limited and may be appropriately adjusted, for example, depending on the target tire category, tire member, target performance, and the like. For example, the content of the vulcanization accelerator is preferably 1 part by mass or more, more preferably 2 parts by mass or more, still more preferably 3 parts by mass or more, and also preferably 8 parts by mass or less, more preferably 6 parts by mass or less, and still more preferably 5.5 parts by mass or less, per 100 parts by mass of the rubber component (A).

(Cellulose Nanofiber)

The rubber composition for a tire of the present embodiment may contain cellulose nanofiber (CNF). By compounding cellulose nanofiber into the rubber composition, the rubber composition can be reinforced. As the cellulose nanofiber, a modified cellulose nanofiber is preferred, and the modified cellulose nanofiber is a fine fiber made from modified cellulose as a raw material. The fiber diameter of the cellulose nanofiber is not particularly limited, but is about 3 to 500 nm. The average fiber diameter and average fiber length of the cellulose nanofiber can be obtained by averaging the fiber diameters and fiber lengths obtained from observing each fiber using a scanning electron microscope (SEM), atomic force microscope (AFM), or transmission electron microscope (TEM). The cellulose nanofiber can be obtained by fibrillating cellulose. Further, the average fiber length and average fiber diameter of the fine fibers can be adjusted by oxidation treatment and fibrillation treatment.

The raw material for the cellulose nanofiber only needs to contain cellulose and is not particularly limited, but examples include plants (for example, wood, bamboo, hemp, jute, kenaf, agricultural residue, cloth, pulp (unbleached softwood kraft pulp (NUKP), bleached softwood kraft pulp (NBKP), unbleached hardwood kraft pulp (LUKP), bleached hardwood kraft pulp (LBKP), bleached kraft pulp (BKP), unbleached softwood sulfite pulp (NUSP), bleached softwood sulfite pulp (NBSP), thermomechanical pulp (TMP), recycled pulp, waste paper, etc.)), animals (for example, tunicates), algae, microorganisms (for example, acetic acid bacteria (Acetobacter)), microbial products, and the like. These cellulose raw materials may be used alone or in combination of two or more.

The content of the cellulose nanofiber is not particularly limited and may be appropriately adjusted, for example,

depending on the target tire category, tire member, target performance, and the like. For example, the content of the cellulose nanofiber is preferably in the range of 1 to 100 parts by mass, more preferably in the range of 5 to 70 parts by mass, and still more preferably in the range of 10 to 40 parts by mass, per 100 parts by mass of the rubber component (A).

(Porous Cellulose Particles)

The rubber composition for a tire of the present embodiment may contain porous cellulose particles. The porous cellulose particles are preferably cellulose particles having a porous structure with a porosity of 75 to 95%, and by compounding them into the rubber composition, on-ice performance can be improved. When the porosity of the porous cellulose particles is 75% or more, the effect of improving on-ice performance is excellent, and when the porosity is 95% or less, the strength of the particles can be increased. The porosity is more preferably 80 to 90%. The porosity of the porous cellulose particles can be determined by measuring the volume of a certain mass of sample (i.e., porous cellulose particles) with a graduated cylinder, determining the bulk specific gravity, and calculating according to the following formula:

Porosity (%) = { 1 - [bulk specific gravity of sample (g/mL)] / [true specific gravity of sample (g/mL)]} $\times$ 100

Here, the true specific gravity of cellulose is 1.5.

The particle size of the porous cellulose particles is not particularly limited, but from the viewpoint of wear resistance, those having an average particle size of 1000 μm or less are preferred. The lower limit of the average particle size is not particularly limited, but is preferably 5 μm or more. The average particle size is more preferably 100 to 800 μm, and still more preferably 200 to 800 μm.

As the porous cellulose particles, spherical particles having a long diameter/short diameter ratio of 1 to 2 are preferred. By using such particles with a spherical structure, the dispersibility in the rubber composition is improved, which can contribute to improvement in on-ice performance and maintenance of wear resistance and the like. The long diameter/short diameter ratio is more preferably 1.0 to 1.5.

The average particle size and long diameter/short diameter ratio of the porous cellulose particles are determined as follows. That is, the porous cellulose particles are observed under a microscope to obtain images, and using these images, the long diameter and short diameter (if the long diameter and short diameter are the same, the length in one axial direction and the length in the direction perpendicular to it) of 100 particles are measured, and the average value is calculated to obtain the average particle size, and the average value of the ratio of the long diameter to the short diameter is calculated to obtain the long diameter/short diameter ratio.

As the porous cellulose particles, those commercially available from Rengo Co., Ltd. under the trade name "Viscopearl," and those described in JP 2001-323095 A, JP 2004-115284 A, and the like, can be suitably used.

The content of the porous cellulose particles is not particularly limited and may be appropriately adjusted, for example, depending on the target tire category, tire member, target performance, and the like. For example, the content of the porous cellulose particles is preferably in the range of 0.3 to 20 parts by mass, more preferably in the range of 1 to 15 parts by mass, and still more preferably in the range of 3 to 15 parts by mass, per 100 parts by mass of the rubber component (A).

(Solid Fine Particles)

The rubber composition for a tire of the present embodiment may contain solid fine particles. By incorporating such solid fine particles into the rubber composition, it is possible to improve on-ice performance. The average particle diameter of the solid fine particles is preferably 1 μm or more, more preferably 1000 μm or less, and even more preferably 300 μm or less. Examples of the solid fine particles include: plant-derived powders obtained from plants such as rice husk, walnut powder, or walnut shells; animal-derived powders obtained from animals such as eggshell (eggshell powder) or bone powder; powders derived from natural minerals such as shirasu; inorganic fine particles such as graphite or zinc oxide whiskers; water-soluble metal salt fine particles such as magnesium sulfate or metal salts of lignin sulfonic acid; non-metallic fibers such as glass fiber; and the like. Among these, rice husk, walnut shell, eggshell, and shirasu are preferred.

The content of the solid fine particles is not particularly limited and may be appropriately adjusted depending on, for example, the tire category to which it is applied, the tire member, target performance, and the like. For example, the content of the solid fine particles is preferably in the range of 0.3 to 20 parts by mass, more preferably in the range of 1 to 15 parts by mass, and even more preferably in the range of 3 to 15 parts by mass, per 100 parts by mass of the rubber component (A).

(Other Additives)

The rubber composition for a tire of the present embodiment may further contain, in addition to the above-mentioned components, various additives commonly used in the tire industry, such as organic peroxides, and the like. The content of these additives is not particularly limited and may be appropriately adjusted depending on, for example, the tire category to which it is applied, the tire member, target performance, and the like. For example, the content is preferably in the range of 0.1 to 200 parts by mass per 100 parts by mass of the rubber component (A).

(Method for Producing the Rubber Composition)

The method for producing the rubber composition for a tire of the present embodiment is not particularly limited. For example, the rubber composition can be produced by compounding the rubber component (A) with plant-derived silica (B1), resin (C), and various other components selected as necessary, followed by kneading, warming, extrusion, and the like. Further, by vulcanizing the obtained rubber composition, a vulcanized rubber can be obtained.

The kneading conditions are not particularly limited, and various conditions such as the input volume of the kneading apparatus, the rotational velocity of the rotor, ram pressure, kneading temperature, kneading time, and the type of kneading apparatus may be appropriately selected according to the intended purpose. Examples of kneading apparatuses include, but are not limited to, Banbury mixers, Intermix, kneaders, and rolls, which are commonly used for kneading rubber compositions.

The conditions for warming are also not particularly limited, and various conditions such as warming temperature, warming time, and warming apparatus may be appropriately selected according to the intended purpose. Examples of warming apparatuses include, but are not limited to, warming roll machines commonly used for warming rubber compositions.

The conditions for extrusion are also not particularly limited, and various conditions such as extrusion time, extrusion speed, extrusion apparatus, and extrusion temperature may be appropriately selected according to the intended purpose. Examples of extrusion apparatuses include, but are not limited to, extruders commonly used for extruding rubber compositions. The extrusion temperature may be determined as appropriate.

The apparatus, method, and conditions for vulcanization are also not particularly limited and may be appropriately selected according to the intended purpose. Examples of apparatuses for vulcanization include, but are not limited to, molding vulcanizers using molds commonly employed for vulcanizing rubber compositions. As for the vulcanization conditions, the temperature is, for example, about 100°C to 190°C.

(Applications)

The rubber composition for a tire of the present embodiment can be applied to various constituent members of a tire, for example, tread (cap tread, base tread, under tread), cushion rubber, shoulder, sidewall, clinch, bead filler, coating rubber for carcass, insulation, chafer, inner liner, and the like, and can also be used for side reinforcing layers of run flat tires and the like. In addition to tires, the rubber composition of the present embodiment can also be applied to rubber crawlers, seismic isolation rubber, hoses, and the like. Among these, since the rubber composition for a tire of the present embodiment does not impair wet gripping performance and high fuel efficiency, it is particularly suitable for use as tread for tires and tread for rubber crawlers.

<Tire>

A tire of the present embodiment is characterized by comprising tread rubber made from the above-described rubber composition for a tire.

Since the tire of the present embodiment comprises tread rubber made from the above-described rubber composition for a tire, the ratio of sustainable materials is improved, and performance is not impaired.

Next, an embodiment of a tire according to the present disclosure will be described in detail with reference to the drawings.

FIG. 1 is a cross-sectional view illustrating an embodiment of a tire according to the present disclosure. The tire 1 of the present embodiment illustrated in FIG. 1 includes a pair of bead portions 2, a pair of sidewall portions 3, and a tread portion 4 continuous with both sidewall portions 3, and further includes a carcass 5 extending in a toroidal shape between the pair of bead portions 2 to reinforce each of these portions 2, 3, and 4, and a belt 6 disposed on the tire radial outer side of the crown portion of the carcass 5.

The carcass 5 of the tire 1 illustrated in FIG. 1 is composed of a single carcass ply formed by coating a plurality of cords arranged in parallel with coating rubber. The carcass 5 includes a main body portion extending in a toroidal shape between bead cores 7 embedded in the bead portions 2, and a turn-up portion wound around each bead core 7 from the

inner side to the outer side in the tire width direction and extending radially outward. However, in the tire of the present disclosure, the number of plies and the structure of the carcass 5 are not limited thereto.

The belt 6 of the tire 1 illustrated in FIG. 1 is composed of two belt layers 6A and 6B. However, in the tire of the present disclosure, the number of belt layers constituting the belt 6 is not limited thereto, and the number of belt layers may be three or more. Here, the belt layers 6A and 6B are generally rubberized layers of cords (preferably steel cords) extending obliquely with respect to the tire equator, and the two belt layers 6A and 6B are laminated such that the cords constituting the belt layers 6A and 6B cross each other across the tire equator to form the belt 6.

The tire 1 of the present embodiment is provided with tread rubber 8 on the outermost surface of the tread portion 4, and the above-described rubber composition for a tire of the present embodiment is used for the tread rubber 8. Therefore, the tire 1 of the present embodiment has an improved ratio of sustainable materials.

It should be noted that the tire of the present disclosure only needs to comprise tread rubber made from the above-described rubber composition for a tire, and various modifications can be made. For example, a belt reinforcement layer may be disposed on the tire radial outer side of the belt 6 of the tire 1 illustrated in FIG. 1, or the tread rubber 8 may be divided into a cap rubber located on the outermost surface side and a base rubber located on the tire radial inner side.

The tire of the present embodiment can be produced by using the above-described rubber composition as tread rubber by a conventional method. For example, the tire of the present embodiment may be obtained by molding using an unvulcanized rubber composition and then vulcanizing according to the type of tire to be applied, or by molding using a semi-vulcanized rubber that has undergone a preliminary vulcanization step and then further subjecting it to main vulcanization. The tire of the present embodiment is preferably a pneumatic tire, and as the gas to be filled in the pneumatic tire, in addition to ordinary air or air with adjusted oxygen partial pressure, inert gases such as nitrogen, argon, or helium can be used.

EXAMPLES

Hereinafter, the present disclosure will be described in further detail by way of examples, but the present disclosure is not limited to the following examples.

Each rubber composition was prepared in accordance with conventional methods using the formulations shown in Table 1. The details of the modified SBR-A and modified SBR-B in Table 1 are as follows.

For each obtained rubber composition, the total mass ratio of materials derived from biological resources (biomass resources) and materials derived from recycled resources was calculated to determine the sustainable material ratio. The higher the value, the more excellent the effect.

<Synthesis of SBR-A>

SBR-A is a styrene-butadiene rubber (SBR) obtained using butyllithium as an initiator, and is modified at the terminal with N,N-bis(trimethylsilyl)-3-[diethoxy(methyl)silyl]propylamine, with a glass transition temperature of -62°C. The method for measuring Tg is as described below.

<Synthesis of SBR-B>

SBR-B is a styrene-butadiene rubber (SBR) obtained using butyllithium as an initiator, and is modified at the terminal with N-(1,3-dimethylbutylidene)-3-triethoxysilyl-1-propylamine. The Tg is -38°C.

<Synthesis of Glycerin Fatty Acid Ester (Nonionic Surfactant)>

The glycerin fatty acid ester was prepared by synthesizing according to the method described in Preparation Example 1 of International Publication No. 2014/098155, substituting the fatty acid with a palm oil-derived hydrogenated fatty acid of the same molar amount in place of octanoic acid, and further subjecting the product to molecular distillation (glycerin fatty acid ester composition). The obtained glycerin fatty acid ester had a glycerin fatty acid monoester content of 97 mass%.

<Measurement of Glass Transition Temperature>

A DSC250 manufactured by TA Instruments was used, and the DSC curve was recorded while heating from -100°C at a rate of 20°C/min under a helium flow of 50 mL/min. The peak top of the DSC differential curve was taken as the glass transition temperature.

[Table 1]

<table>
<tr><td colspan="4"></td><td>Comparative Example 1</td><td>Example 1</td></tr>
<tr><td rowspan="16">Formulation</td><td rowspan="3">Rubber component (A)</td><td>Natural rubber</td><td rowspan="16">Parts by mass</td><td>50</td><td>50</td></tr>
<tr><td>Modified SBR-A</td><td>25</td><td>25</td></tr>
<tr><td>Modified SBR-B</td><td>25</td><td>25</td></tr>
<tr><td rowspan="4">Filler (B)</td><td>Carbon black * 1</td><td>5</td><td>5</td></tr>
<tr><td>Mineral-derived silica *2</td><td>60</td><td>-</td></tr>
<tr><td>Plant-derived silica *3</td><td>-</td><td>60</td></tr>
<tr><td>Aluminum hydroxide *4</td><td>25</td><td>25</td></tr>
<tr><td>Resin (C)</td><td>Hydrogenated $C_5$-based resin *5</td><td>10</td><td>10</td></tr>
<tr><td colspan="2">Silane coupling agent *6</td><td>7.8</td><td>7.8</td></tr>
<tr><td colspan="2">Nonionic surfactant *7</td><td>1</td><td>1</td></tr>
<tr><td colspan="2">Stearic acid</td><td>1</td><td>1</td></tr>
<tr><td colspan="2">Zinc white</td><td>2.5</td><td>2.5</td></tr>
<tr><td colspan="2">Antioxidant package</td><td>4.1</td><td>4.1</td></tr>
<tr><td colspan="2">Vulcanization accelerator package</td><td>4.2</td><td>4.2</td></tr>
<tr><td colspan="2">Sulfur</td><td>2.0</td><td>2.0</td></tr>
<tr><td colspan="2">Retarder</td><td>0.3</td><td>0.3</td></tr>
<tr><td></td><td colspan="2">Other chemicals *8</td><td></td><td>5</td><td>5</td></tr>
<tr><td rowspan="3">Evaluation</td><td colspan="2">Total parts by mass in formulation</td><td>Parts by mass</td><td>227.9</td><td>227.9</td></tr>
<tr><td colspan="2">Parts by mass of sustainable materials in formulation</td><td>Parts by mass</td><td>50</td><td>110</td></tr>
<tr><td colspan="2">Sustainable material ratio</td><td>Mass%</td><td>22</td><td>48</td></tr>
<tr><td colspan="6">*1 Carbon black: N234<br>*2 Mineral-derived silica: Tosoh Silica Corporation, cetyltrimethylammonium bromide (CTAB) adsorption specific surface area = 191 $m^2/g$, nitrogen adsorption specific surface area (BET method) = 245 $m^2/g$, average primary particle diameter = 5-25 nm<br>*3 Plant-derived silica: rice husk silica<br>*4 Aluminum hydroxide: Showa Denko K.K., trade name "Higilite® (Higilite is a registered trademark in Japan, other countries or both)," average primary particle diameter = 0.5-10 μm<br>*5 Hydrogenated $C_5$-based resin: Eastman Chemical Company, trade name "Impera® (Impera is a registered trademark in Japan, other countries, or both) E1780," softening point = 130°C, weight-average molecular weight (Mw) = 909 g/mol<br>*6 Silane coupling agent: Evonik, trade name "Si75"<br>*7 Nonionic surfactant: the product prepared in (Synthesis of Glycerin Fatty Acid Ester) above<br>*8 Other chemicals: wax, etc.</td></tr>
</table>

From Table 1, it can be seen that the rubber composition of the example according to the present disclosure has an improved ratio of sustainable materials, and by applying it to tires, the ratio of sustainable materials in the tire can be increased.

REFERENCE SIGNS LIST

1: tire
2: bead portion
3: sidewall portion
4: tread portion
5: carcass
6: belt
6A, 6B: belt layer
7: bead core
8: tread rubber

**Claims**

1. A rubber composition for a tire comprising a rubber component (A), a filler (B), and a resin (C), wherein

   the rubber component (A) includes two or more types of rubber,
   the filler (B) includes plant-derived silica (B1), and
   a ratio of the plant-derived silica (B1) in the filler (B) is 45 mass% or more.

2. The rubber composition for a tire according to claim 1, wherein the rubber component (A) includes isoprene skeleton rubber.

3. The rubber composition for a tire according to claim 1, wherein content of the resin (C) is 1 part by mass to 50 parts by mass per 100 parts by mass of the rubber component (A).

4. The rubber composition for a tire according to claim 1, wherein the rubber component (A) includes styrene-butadiene rubber.

5. The rubber composition for a tire according to claim 1, wherein the resin (C) is a hydrogenated resin having a softening point of higher than 110°C and a polystyrene-equivalent weight-average molecular weight of 200 g/mol to 1600 g/mol.

6. The rubber composition for a tire according to claim 1, wherein the plant-derived silica (B1) is silica derived from a gramineous plant.

7. The rubber composition for a tire according to claim 6, wherein the plant-derived silica (B1) is silica derived from rice husk.

8. The rubber composition for a tire according to claim 1, wherein the rubber composition is for a tire tread.

9. A tire comprising tread rubber made from the rubber composition for a tire according to claim 1.

FIG. 1

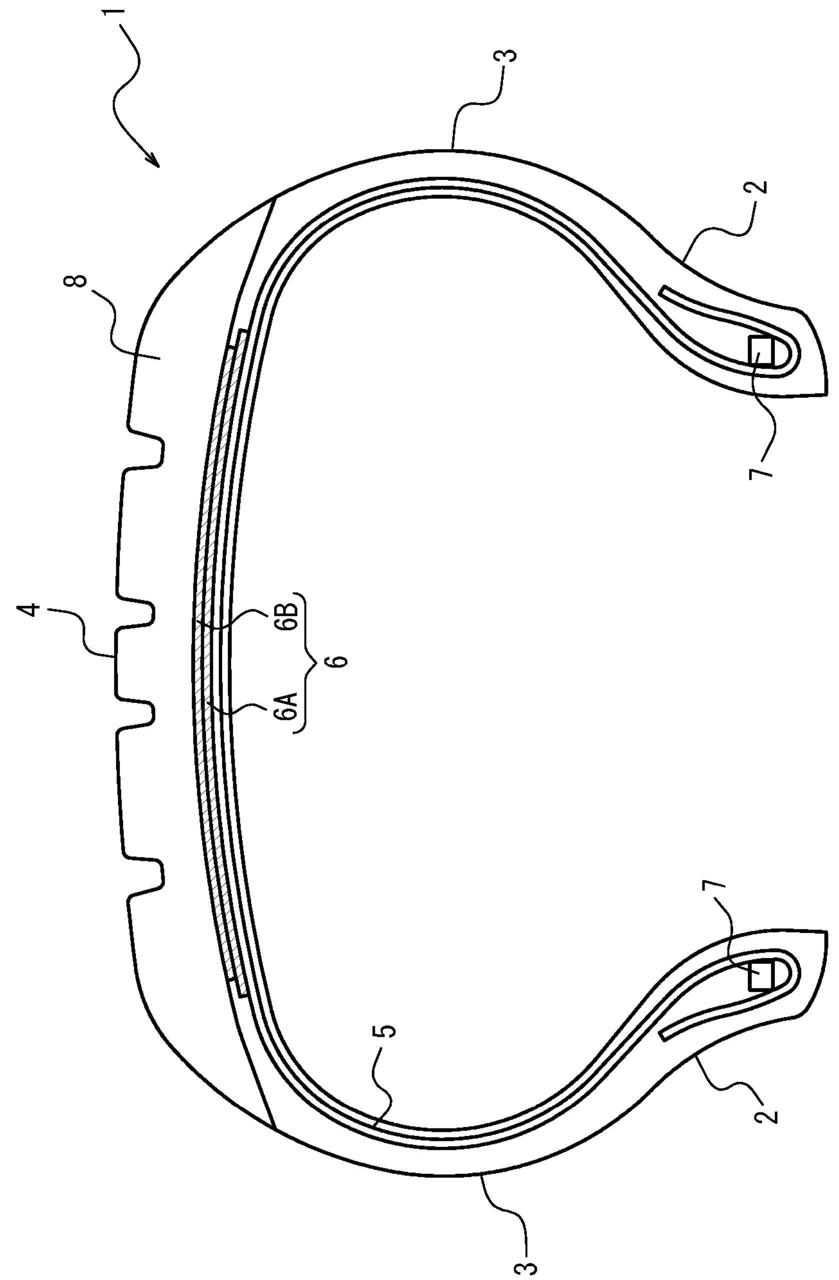

## INTERNATIONAL SEARCH REPORT

International application No.
**PCT/JP2024/023989**

**A. CLASSIFICATION OF SUBJECT MATTER**

***C08L 21/00***(2006.01)i; ***B60C 1/00***(2006.01)i; ***C08K 3/013***(2018.01)i; ***C08K 3/36***(2006.01)i; ***C08L 7/00***(2006.01)i; ***C08L 9/00***(2006.01)i; ***C08L 101/00***(2006.01)i
FI: C08L21/00; C08L9/00; C08K3/36; C08K3/013; C08L101/00; B60C1/00 Z; B60C1/00 A; C08L7/00

According to International Patent Classification (IPC) or to both national classification and IPC

**B. FIELDS SEARCHED**

Minimum documentation searched (classification system followed by classification symbols)

C08L21/00; B60C1/00; C08K3/013; C08K3/36; C08L7/00; C08L9/00; C08L101/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2023-91770 A (THE GOODYEAR TIRE & RUBBER COMPANY) 30 June 2023 (2023-06-30)<br>paragraphs [0034], [0036], [0040], [0088]-[0090], tables 4-6, sample L | 1-9 |
| X | JP 2022-179157 A (SUMITOMO RUBBER INDUSTRIES, LTD.) 02 December 2022 (2022-12-02)<br>claims, paragraphs [0032], [0169], [0186], [0188], [0255]-[0256], tables 1-2, examples 1-7, 2-7 | 1-9 |
| X<br>A | WO 2019/229692 A1 (PIRELLI TYRE S. P. A.) 05 December 2019 (2019-12-05)<br>example 2B, p. 26, lines 5-9, table 6 | 1-4, 6-9<br>5 |
| A | US 2023/0174743 A1 (THE GOODYEAR TIRE & RUBBER COMPANY) 08 June 2023 (2023-06-08) | 1-9 |
| A | JP 2023-60806 A (SUMITOMO RUBBER INDUSTRIES, LTD.) 28 April 2023 (2023-04-28) | 1-9 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 August 2024** | **10 September 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**
**Information on patent family members**

International application No.
**PCT/JP2024/023989**

| Patent document cited in search report | Publication date (day/month/year) | Patent family member(s) | Publication date (day/month/year) |
|---|---|---|---|
| JP 2023-91770 A | 30 June 2023 | US 2023/0192998 A1<br>paragraphs [0047], [0049], [0057], [0113], tables 4-6, sample L<br>EP 4201993 A1<br>CN 116285035 A | |
| JP 2022-179157 A | 02 December 2022 | EP 4092078 A2<br>claims, paragraphs [0024], [0178], [0204], [0207], [0305]-[0306], tables 1-2, examples 1-7, 2-7 | |
| WO 2019/229692 A1 | 05 December 2019 | EP 3802152 A1<br>CN 112074421 A<br>BR 112020020053 A | |
| US 2023/0174743 A1 | 08 June 2023 | EP 4190589 A1 | |
| JP 2023-60806 A | 28 April 2023 | EP 4166353 A1<br>CN 115991896 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019218464 A
- JP 2022140390 A
- JP 2016194316 A
- JP 2019117256 A
- JP 2022179158 A
- JP 2019038728 A
- JP 2005139239 A
- JP 2001323095 A
- JP 2004115284 A
- WO 2014098155 A